Europäisches Patentamt

European Patent Office

Office européen des brevets

(11) Publication number: **0 388 107 B1**

## EUROPEAN PATENT SPECIFICATION

(45) Date of publication of patent specification: **30.11.94**

(51) Int. Cl.⁵: **B60R 16/02**, B60K 41/04, B60G 17/00, B60G 21/00, F02D 41/00, B60K 41/20

(21) Application number: **90302584.9**

(22) Date of filing: **12.03.90**

(54) Vehicle control apparatus and method therefor.

(30) Priority: **17.03.89 JP 63746/89**

(43) Date of publication of application:
**19.09.90 Bulletin 90/38**

(45) Publication of the grant of the patent:
**30.11.94 Bulletin 94/48**

(84) Designated Contracting States:
**DE GB**

(56) References cited:
**EP-A- 0 058 390
EP-A- 0 230 735
US-A- 4 606 005
US-A- 4 630 583
US-A- 4 760 275**

**IEEE SPECTRUM vol. 23, no. 6, June 1986,
New York,US pages 53 - 59
R.K.Jurgen:"Coming from Detroit: networks
on wheels"**

(73) Proprietor: **HITACHI, LTD.
6, Kanda Surugadai 4-chome
Chiyoda-ku, Tokyo 100 (JP)**

(72) Inventor: **Ohsuga, Minoru
2778-3, Higashiishikawa
Katsuta-shi, Ibaraki-ken (JP)**
Inventor: **Ohyama, Yoshishige
3-24-18, Higashiohshima
Katsuta-shi, Ibaraki-ken (JP)**
Inventor: **Kuroiwa, Hiroshi, 1-15-3, Moriyama-cho
Hitachi-shi
Ibaraki-ken (JP)**
Inventor: **Nogi, Toshiharu, 2593, Takaba
Katsuta-shi
Ibaraki-ken (JP)**
Inventor: **Minowa, Toshimichi
1736-89, Shirakata
Tokai-mura
Naka-gun
Ibaraki-ken (JP)**
Inventor: **Kimura, Hiroshi, Yuho-ryo
6-20-3, Ayukawa-cho
Hitachi-shi, Ibaraki-ken (JP)**

EP 0 388 107 B1

Proc. of the Int. Cong. on Transportation Electronics, 1986, pp. 223-238:"Overview and future plan of automotive electronic systems", A.Numazawa

(74) Representative: **Molyneaux, Martyn William et al**
**c/o Ladas & Parry,**
**Altheimer Eck 2**
**D-80331 München (DE)**

## Description

### BACKGROUND OF THE INVENTION

#### 1. Field of the Invention

The present invention relates to a vehicle control apparatus and method therefor, and particularly, although not exclusively, to an automobile provided with at least two computers, and a transmission path between the computers over which data may be transmitted.

#### 2. Description of the Related Art

Conventional automotive data processing apparatus only regulates the form of transmission and reception of data between a plurality of computers, the format of the data for messages including data, the structure of an LSI for transmission and reception and the types of data (e.g., engine temperature, number of revolutions, load), as described in Japanese Patent Laid-Open No. 195453/1986 but the arrangement for controlling an automobile using such data has not previously been considered.

In the prior art, a controlling method, a method of transmitting and receiving data, the type of data and the timing for transmitting and receiving data so as to actually control an automobile have not been taken into consideration.

In a system of distributing computers and connecting those computers in a network so as to control an automobile, it is desirable that a plurality of computers exchange the results of calculation or simultaneously operate in accordance with the content of the control data. In the prior art system, however, control is restricted to each computer and the benefit of a computer network system is not used to best advantage.

An article "Coming from Detroit: Networks on Wheels", published in I.E.E.E. Spectrum, June 1986, pages 53 - 59, discloses a multiplexing network used in an automobile environment and, in particular, at page 57 of the said article, there is disclosed a high speed data highway interconnecting computers for controlling engine ignition on the basis of outputs from various sensors.

US-A-4760275 discloses microprocessors for controlling an automobile engine and shock absorbers which microprocessors are interconnected over a data bus. The microprocessors controlling respective equipment exchange control data via a data bus and the microprocessors execute control operations in accordance with control parameters obtained from sensors associated therewith and in dependence upon parameters exchanged through the data bus. The said U.S. patent forms the preamble of the subject independent claims. The microprocessors of the U.S. patent, although being connected together, operate their respective sensors independently of one another.

It is an object of the present invention to operate distributed computers which act as controllers in cooperation with each other so that they are all similarly controlled.

### SUMMARY OF THE INVENTION

According to a first aspect of this invention there is provided a a vehicle control apparatus including:

first and second adjusting means for adjusting first and second controlled parameters of a vehicle, respectively;

first and second control means, connected to said first and second adjusting means for controlling said first and second adjusting means, respectively;

a signal communication path interconnecting said first and second control means; and

transferring means for transferring a signal from said first control means to said second control means over said communication path, said signal being determined by said first control means and being representative of a condition to be controlled;

characterized in that said first control means executes a processing for calculating the first controlled parameter on the basis of data supplied, judges, on the basis of the thus calculated first controlled parameter, whether or not said second control means has to operate in cooperation with said first control means, and produces, if the cooperative operation is required, an output signal including an instruction indicative of a cooperative request to said communication path; and

said second control means executes a processing operation for calculating the second controlled parameter in response to the output signal including the instruction indicative of the cooperative request produced by said first control means; and in that

said first and second adjusting means control the first and second controlled parameters associated therewith simultaneously and in accordance with the processing results of the respective first and second control means.

Preferably, there is provided more than two adjusting means, each for adjusting a respective parameter of said vehicle and each adjusting means being arranged to be controlled by a respective control means, all of said control means being interconnected to one another by said communication path, said transferring means being arranged to transfer data over said communication path of a condition representative of a condition to be controlled determined by one of said control means to selected other said control means, whereby said one of said control means and all of said selected other control means control their respective adjusting means in unison. Advantageously, means are provided for according a priority to signals passed over said communication path. Conveniently, the signal communication path is a data highway and said control means are microprocessors.

The adjusting means may include at least one of a throttle actuator, a fuel injector vehicle suspension damper means, vehicle suspension height setting means.

In a preferred embodiment said control means include an engine controller for controlling engine parameters, a transmission controller for controlling a gear shift operation and a throttle controller for controlling a throttle opening angle, said engine controller being adapted to read engine data including air quantity and engine speed, calculate engine torque and to transmit said torque calculation over said communication path to said transmission controller, said transmission controller being adapted to evaluate an appropriate gear ratio and in dependence thereon to drive a gear shift actuator to effect a gear shift whereby if said transmission controller determines that a gear shift is required, said transmission controller is adapted to output a signal over said communication path to said throttle controller whereby said throttle controller is arranged to actuate a throttle actuator to open the throttle to a required angle to effect a substantially jerk-free gear shift, said gear shift actuator and said throttle actuator acting in synchronism with one another.

In another preferred embodiment the control means includes an engine controller, a throttle controller and a suspension controller, said engine controller being adapted to receive signals from an accelerator pedal angle sensor and a brake pedal angle sensor, said engine controller being adapted to provide a signal indicative of the accelerator pedal angle or of the brake pedal angle over the communication path to the throttle controller and synchronously to the suspension controller, said throttle controller being adapted to control a throttle actuator and said suspension controller being arranged to control the vehicle ride height and suspension damping force. In said another preferred embodiment the suspension controller is arranged to control vehicle height actuators and damping force actuators whereby when the vehicle is accelerating the controller is arranged to cause the front vehicle dampers to decrease their ride height, the rear vehicle dampers to increase their ride height and for the damping force actuator to stiffen, and when braking is detected by the suspension controller, said suspension controller is arranged to cause the front vehicle dampers to increase their ride height and the rear vehicle dampers to decrease their ride height, and the damping force actuator to stiffen.

In yet another preferred embodiment the control means includes an engine controller, a torque detecting controller and a transmission controller, said engine controller is connected to a means for determining a cylinder causing a power stroke and said engine controller is adapted to output a signal indicative of said cylinder causing a power stroke to said torque controller, said torque controller is connected to engine crankshaft torque sensors and is adapted to evaluate the engine torque, and to transmit a signal representative thereof over said communication path to said transmission controller and to said engine controller, whereupon the engine controller is adapted to compare the evaluated torque signal with predetermined torque values to thereby calculate the required amount of throttle opening and substantially synchronously therewith the transmission controller is adapted to determine an appropriate gear ratio in dependence upon the evaluated torque signal from the torque controller.

Preferably, the control means include an engine controller and a knock detecting controller, the engine controller being connected to a sensing means for sensing a cylinder causing a power stroke and to an actuator means it for controlling fuel injection pulse width and ignition timing, said knock detecting controller being connected to a knock sensor, said engine controller being adapted to determine a cylinder causing a power stroke and to transmit a signal indicative thereof over said communication path to the knock detecting controller, said knock detecting controller being arranged to detect the level of knocking from the knock sensor and to transmit a signal representative thereof in combination with a cylinder identification signal over said communication path to the engine controller, whereby said engine controller is adapted to calculate the fuel injector pulse width and the ignition timing for said actuator means.

Advantageously, the control means include a diagnostic controller connected to a plurality of sensors indicative of respective operating states of said vehicle, a memory controller for holding predetermined data values, and a display controller for controlling a display, the controllers being interconnected over said communication path, whereby said diagnostic controller is adapted to receive data over said communication path from said sensors and to detect an abnormality, said abnormality subsequently being transmitted over said communication path to said memory controller, said memory controller being adapted to statistically evaluate received data and to transmit a signal over said communication path to the display controller which is adapted to drive said display, and said memory controller is adapted to produce a pseudo signal to facilitate continued operation of the vehicle in the event that a serious abnormality is detected. Preferably, said memory controller is arranged to output a signal to the display controller and produce a pseudo signal only when abnormal data has been received in excess of a predetermined number of times.

According to a second aspect of this invention there is provided a method of controlling a vehicle including:

adjusting first and second controlled parameters of a vehicle with first and second adjusting means, respectively;

controlling said first and second adjusting means with first and second control means, respectively;

providing a signal communication path interconnecting said first and second control means; and

transferring a signal from said first control means to said second control means over said communication path, said signal being determined by said first control means and being representative of a condition to be controlled; characterized by the further steps of

executing a processing in said first control means for calculating the first controlled parameter on the basis of data supplied and judging on the basis of the thus calculated first controlled parameter whether or not said second control means has to operate in cooperation with the first control means, said first control means producing, if the cooperative operation is required, an output signal including an instruction indicative of a cooperative request to said second control means over a communication path;

executing a processing operation in said second control means for calculating the second controlled parameter in response to the output signal including the instruction indicative of the cooperative request produced by said first control means; and

controlling the first and second controlled parameters by said first and second adjusting means simultaneously and in accordance with the processing results of the respective first and second control means.

Thus, the object of the invention is achieved by a structure in which, when a controller (computer) detects the necessity for control, the controller transmits data to other controllers related to the same control function so as to operate the controllers in cooperation and simultaneously with one another.

Therefore, the controller which has detected the necessity for control, transmits a aisngl indicating the necessity for control or data based on the results of calculation performed by said controller to other controllers having a related controlling function. The signal or data may be given a priority value with respect to the data which is transmitted on other communication lines. Therefore, at any time when the necessity for control is detected, the related controllers are actuated with the control data.

In this way, since related controllers cooperate swiftly with one another, smooth operation is enabled even in a computer distribution type system.

BRIEF DESCRIPTION OF THE DRAWINGS

The invention will now be described by way of example with reference to the accompanying drawings in which:-

Figure 1 is a schematic view of a vehicle control apparatus in accordance with this invention;

Figure 2 is a more detailed view of the apparatus shown in Figure 1;

Figure 3 is a detailed view of a communication device used in this invention;

Figure 4 shows the structure of data frame;

Figure 5 shows the connection of controllers (computers);

Figures 6 to 11 are flowcharts showing the operation of the invention;

Figure 12 shows the flow of data in the invention;

Figure 13 is a schematic view apparatus in accordance with the present invention;

Figure 14 is a schematic view showing connections to a data highway;

Figures 15 to 17 are flowcharts of various control programs;

Figures 18(a) and 18(b) are characteristic curves of the throttle opening angle and the acceleration for the prior art and present invention respectively when a gear shift is effected;

Figure 19(a) is a timing diagram and Figures 19-(b) to 19(d) show maps for delay time of the gear transmission shift and throttle actuator respectively;

Figure 20 shows the flow of data when effecting a gear shift;

Figure 21 schematically shows the controls of the engine, the throttle and the suspension;

Figure 22 shows the connection of controllers (computers) for effecting the operation of Figure 21;

Figure 23 schematically shows the structure of control for effecting the operation of Figure 21;

Figure 24 shows the position of the automobile suspension;

Figures 25 and 26 are characteristic curves of the automobile when accelerating and decelerating;

Figures 27 to 30 are flowcharts for controllers during acceleration and deceleration;

Figure 31 is a characteristic curve of values retrieved from memory;

Figure 32 is a flowchart for a suspension controller;

Figure 33 shows the flow of data between three controllers including the suspension controller;

Figure 34 is a schematic view of a torque detection device;

Figure 35 is a flowchart for calculating average engine torque;

Figure 36 shows the connection between the serial communication controllers (computers) for the engine and the transmission;

Figure 37 shows the flow of data for the controllers of Figure 36;

Figure 38 is a schematic view of a knocking controlling device;

Figure 39 to 42 are sectional views of knocking sensors;

Figures 43 and 44 show the wave forms of the signals of the knocking sensors;

Figure 45 is a detailed view of a knocking controlling device;

Figure 46 is a time chart of the knocking sensors;

Figures 47 and 48 are flowcharts for the knocking sensors;

Figure 49 shows the flow of data between the engine and knocking controllers;

Figure 50 schematically shows a diagnostic device;

Figure 51 shows the connection between the diagnostic and display computers;

Figure 52 shows the apparatus used in the diagnostic device of Figure 50;

Figure 53 shows the contents of the memory used in Figure 52;

Figures 54 to 57 are flowcharts for the diagnostic device;

Figure 58 shows the contents of the memory producing pseudo data;

Figure 59 is a flowchart of display; and

Figure 60 shows the flow of data between the diagnostic memory and display controllers.

In the Figures like reference numerals denote like parts.

## DESCRIPTION OF THE PREFERRED EMBODIMENTS

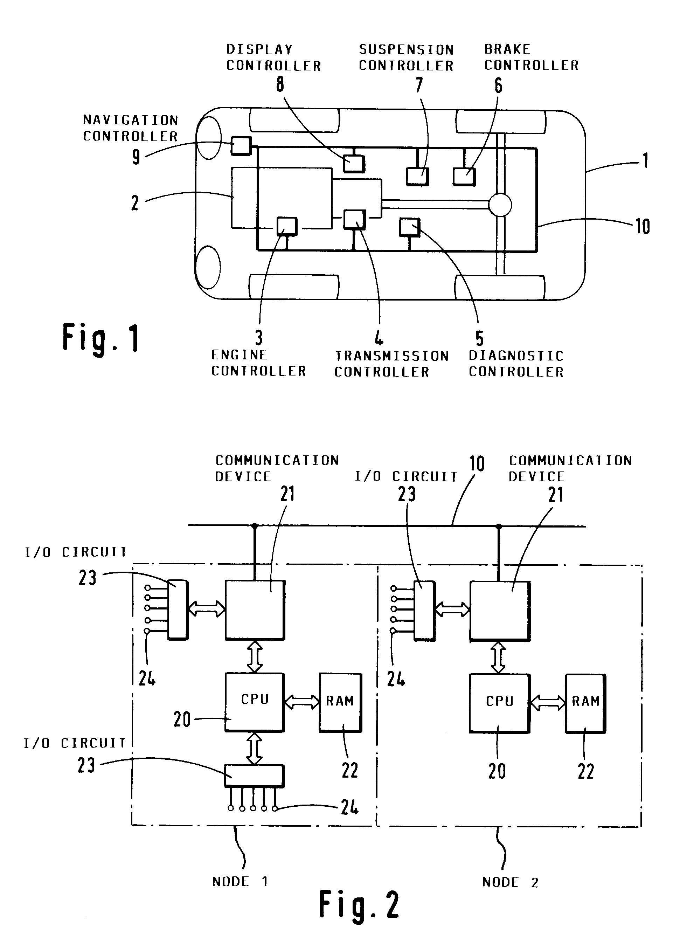

Figure 1 shows the entire structure of a local area network (LAN) of an automobile.

A system 1 is provided with a control unit for exclusive use of each control element such as an engine, transmission, diagnostic device, brake, suspension, warning indicator and navigation system. Each of the control units performs control and measurement of an associated element. Only information that is necessary in operation is transmitted and received between a control unit and another control unit on a communication bus 10 which utilises serial transmission.

It is now assumed that in the system 1 a control unit which is connected to each controlled element and a transmission and reception device is called a node 2. This system is provided with exclusive nodes such as an engine controller 3, a transmission controller 4, a diagnostic device controller 5, a brake controller 6, a suspension controller 7, a display controller 8 and a navigation controller 9.

Figure 2 shows an example of the structure of each node. A communication device 21 is connected to the communication bus 10. The communication device 21 transmits the data supplied from a computer (CPU) 20 or controls the data received from the communication bus 10. The communication device 21 also controls the timing for data transmission, checks for data errors and judges the priority order of data. Because of the functional operability of the communication device 21, so the CPU 20 can concentrate on the control of the subordinate control elements. In order to transmit data, the necessary procedure is to write the data in the memory of a special address in the communication device 21 and for the device 21 to request transmission over the communication bus. On the other hand, in the case of reception, it is only necessary to supply a request for reception to the communication device 21 and read the data into the memory thereof. Data transmitted and received in this way is information which is necessary for a plurality of nodes to simultaneously execute related operations.

In the structure of node 1, the CPU 20 is connected to the communication device 21 and a RAM 22 and an input/output circuit 23 are connected to the CPU 20. Devices 24, such as a sensor and an actuator, are connected to the input/output circuit 23 so as to control the parameters of variable elements to which they are attached. It is also possible to connect the input/output circuit 23 to the communication device 21. Node 2 has a simplified structure in which control is carried out only by the input/output circuit 23 connected to the communication device 21.

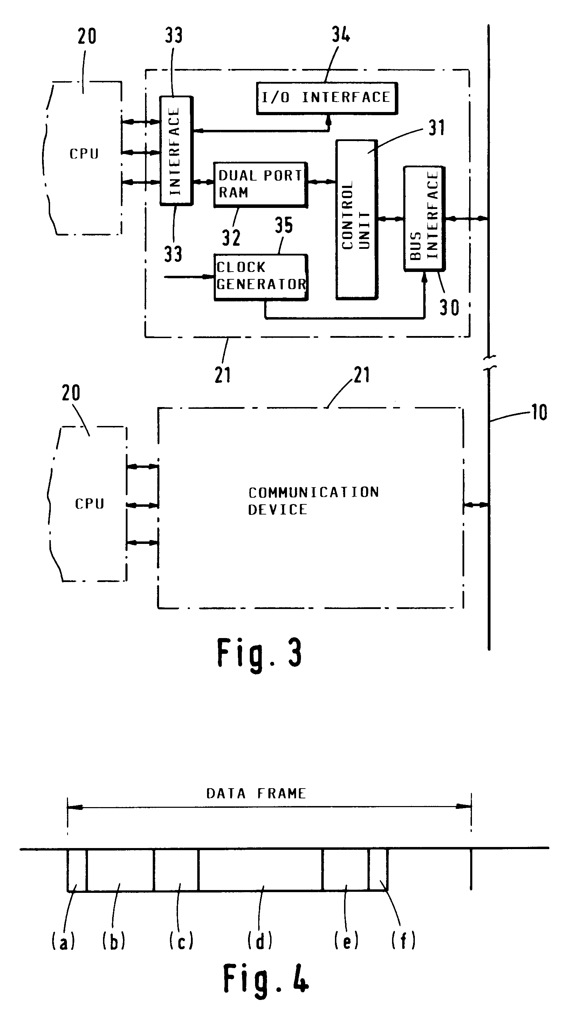

Figure 3 shows the details of the communication device 21. A control unit 31 executes the command related to transmission and reception which is supplied from the CPU 20. A bus interface 30 performs the function of judging an error in data, timing control, etc. When the CPU 20 transmits data to another node, the data is written in a special address on a dual port RAM 32 through an interface 33. A request for transmission is next supplied to the control unit 31. The control unit 31 scans the memory on the dual port 32 to obtain the corresponding data and transmits it to the communication bus 10 through the bus interface 30. The bit timing of data is controlled by a clock generator 35. An I/O interface 34 executes the output/input control of a signal of the communication device 21 in accordance with a command from the CPU 20.

Figure 4 shows the structure of the data frame supplied to the communication bus 10. The symbol (a) represents a start bit indicating the start of the data frame, (b) represents bits indicating the priority level, the destination or the like of data, (c) represents a control bit indicating the length of the data shown in (d) which represents a data portion, (e) represents an error check portion and (f) represents an end bit indicating the end of the data frame. The bits (b) can be set by the CPU 20.

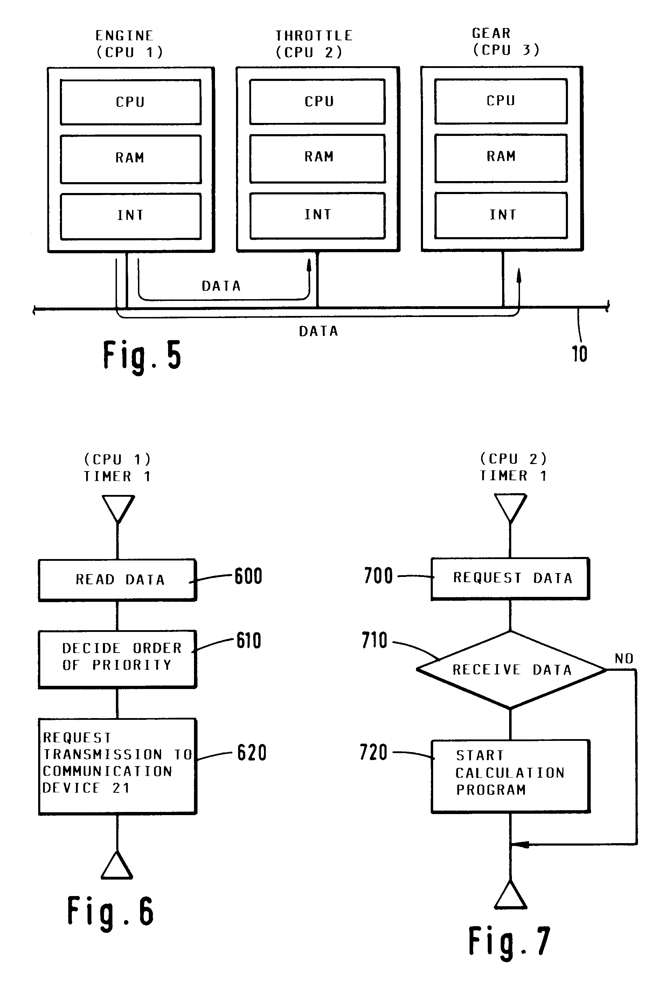

As shown in Figure 1, data measured and calculated by one node is serially transferred to the CPUs 20 of a plurality of nodes through the communication bus 10. A plurality of CPUs 20 thus operate in cooperation with each other for the same controlling object. As shown in Figure 5, if CPU 1, CPU 2 and CPU 3 are connected with each other through the communication bus 10, the data measured and processed by the CPU 1 is transferred to the CPU 2 and CPU 3. In the present invention, the CPU 1, CPU 2 and CPU 3 operate in cooperation with each other for the same unifying controlling object or purpose. In this case, the data necessary for the operation is transmitted and received between the CPUs. For example, in the case of shifting gears in an automobile, it is desirable to operate a throttle at the same time as switching the transmission gear ratios. In the computer distribution type system such as that of the present invention, separate CPUs are operated. For example, if it is assumed in Figure 5 that the CPU 1 is a CPU for controlling an engine, the CPU 2 is a CPU for controlling a throttle which as well as being driver actuable is also actuable by a motor or the like, and the CPU 3 is a CPU for controlling an electrically operated gear box transmission, the CPU 1, CPU 2 and CPU 3 operate in cooperation with each other for the same controlling object, which in this case is to control the gear changing operation.

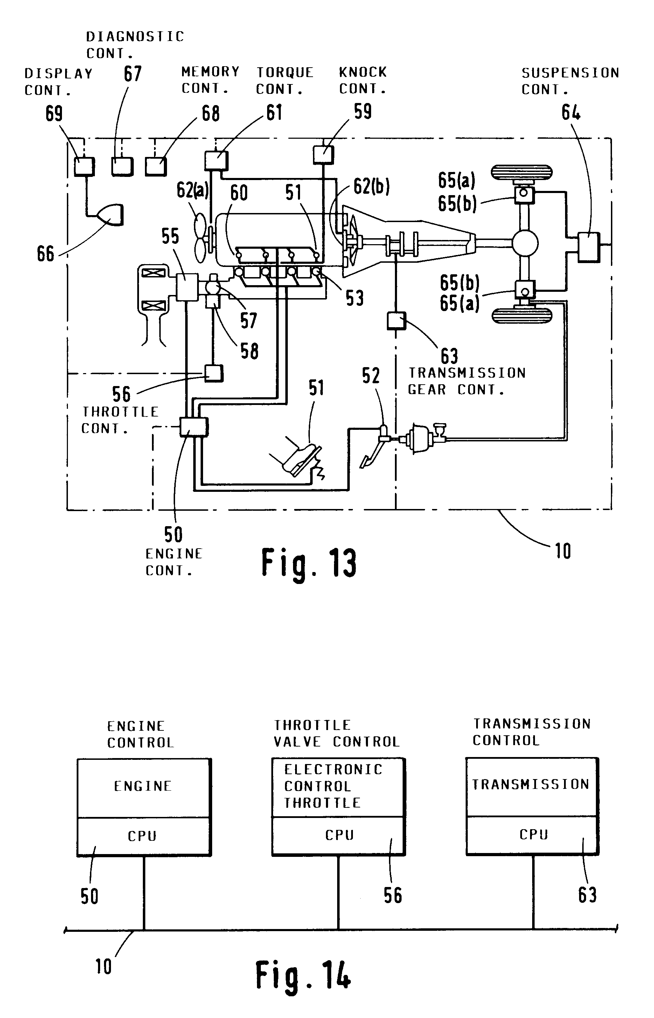

The CPU 1 measures the number n of revolutions of the engine and the amount $Q_a$ of air and supplies the data to the CPU 3. The CPU 3 determines the gear ratio of the transmission on the basis of this data. The information on the thus-determined gear ratio is supplied to the CPU 2, which calculates the required throttle opening corresponding to the engine speed and gear ratio. After these processings, the CPU 2 sets the throttle opening angle at the desired position for a smooth gear change. The CPU 3 simultaneously shifts the gears in cooperation with the CPU 2. In this example, the timing for the operation may be determined either by the CPU 2 or CPU 3. The forementioned gear change operation is more fully described hereinafter with reference to the accompanying Figures 14-20.

The flowcharts for the cooperative control between the CPU 1 and the CPU 2 will now be explained.

Figures 6, 9 and 11 are flowcharts for the CPU 1, and Figures 7, 8 and 10 are flowcharts for the CPU 2.

Referring first to Figure 6, the CPU 1 reads the data n and $Q_a$ from sensors at the step 600. At the step 610, the priority order of the data is determined and at the step 620 a request for transmission is supplied to the communication device 21.

In Figure 7, the CPU 2 supplies a request for data reception at the step 700, and determines if data is received from the CPU 1 at the step 710. At the step 720, the calculation program is started on the basis of the data.

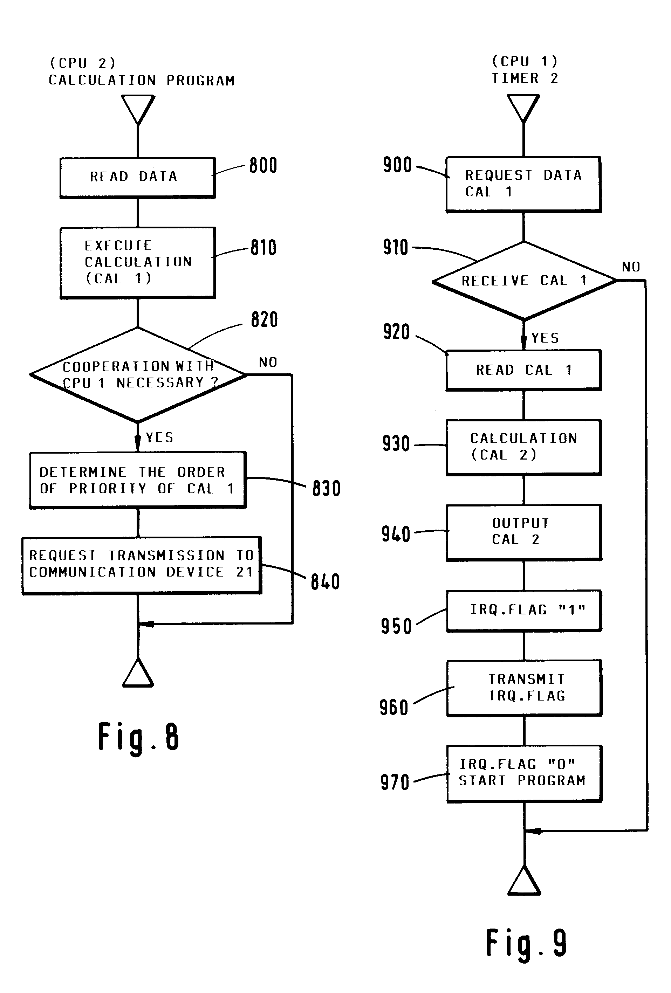

Figure 8 shows the calculation program of the CPU 2. At the step 800, the data is read and at the step 810, a predetermined calculation is executed to obtain the result cal 1. At the step 820, judgment is made as to whether or not the cooperation with the CPU 1 is necessary. This judgment is made on the basis of the result cal 1 of the calculation carried out at the step 810. When the cooperation with the CPU 1 is judged to be necessary, the priority order is allotted to the result of calculation cal 1 at the step 830 and a request for transmission to the CPU 1 is output at the step 840.

The CPU 1 requests, at step 900, of Figure 9, the reception of the result of the calculation and receives it at step 910, and executes different calculations on the basis of the received data at the steps 920 and 930. At the step 940, the results of the calculations (cal 2) are output.

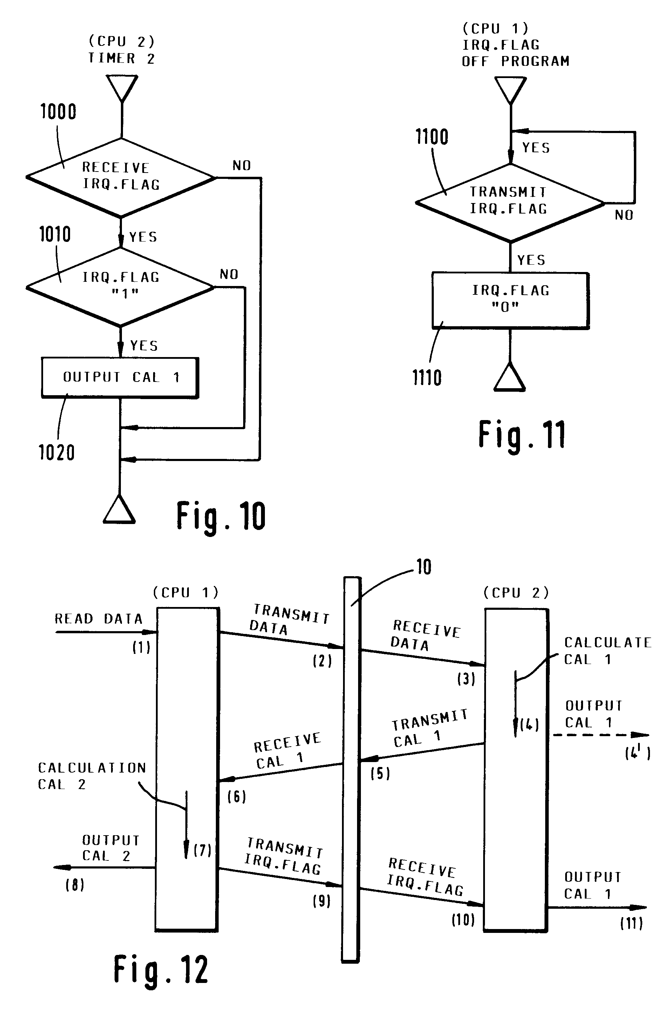

The CPU 1 and the CPU 2 substantially simultaneously control the objects of control, i.e. the apparatus/devices to be controlled, which are connected to the respective CPUs on the basis of the results (cal 1 and cal 2) of calculations. More specifically, after the CPU 1 outputs the result cal 2 of calculation and controls the actuator directly associated with CPU 1, the CPU 1 transmits an interruption request, IRQ. FLAG to the CPU 2, which immediately executes control of the actuator directly associated with CPU 2, as shown at the steps 950 to 970. In this case, it is necessary to indicate the priority of the transmission of the message of the IRQ. FLAG so as to enable the CPU 1 and the CPU 2 to substantially simultaneously control the actuators directly associated with CPU 1 and CPU 2. Figure 10 shows the operation of the CPU 2. As soon as the IRQ. FLAG is received, the CPU 2 outputs the result cal 1 of calculation as the external output and controls the actuator associated with CPU 2, as shown at the steps 1000 to 1020 if the IRQ. FLAG is high, i.e. logic level 1.

Finally, at the step 970 shown in Figure 9, the IRQ. FLAG is turned OFF (logic level 0), thereby ending the process. This operation is shown at the steps 1100 to 1110 in Figure 11. The timing for the cooperative operation is determined by reciprocity between the CPU 1 and the CPU 2.

In this way, the cooperative operation is carried out by at least two CPUs through the communication bus 10.

Figure 12 is an explanatory view of these flowcharts simplified for making them easier to understand.

The CPU 1 first reads (1) data and transmits (2) the data to the communication bus 10, and the CPU 2 receives (3) the data. The CPU 2 calculates (4) on the basis of this data to obtain the result cal 1.

The result cal 1 of calculation is transmitted (5) to the communication bus 10 and is received (6) by the CPU 1.

On the basis of the result cal 1 of calculation, the CPU 1 calculates (7) to obtain the result cal 2.

The result cal 2 of calculation is output (8) to sensors/actuators and the CPU 1 outputs and transmits (9) an interruption request (IRQ. FLAG) to the communication bus 10, the interruption request being received (10) by the CPU 2. The CPU 2 outputs (11) the result cal 1 of calculation to the appropriate element to be controlled.

In the case shown in Figure 12, since it is necessary to substantially simultaneously output the cal 1 and cal 2, at the time of IRQ. FLAG transmission, the data is given priority over other data so as to be transmitted earlier than said other data. The difference in timing between the cal 1 and the cal 2 is only a transmission delay of the IRQ. FLAG. In this way, the timing accuracy for cooperative control is enhanced.

In Figure 12, it is possible that the cal 1 is output (4') after the calculation (4) of the cal 1. In this case, it is necessary to set the highest priority to the transmission of the cal 1 in order to hasten the output of the cal 2. By doing so, it is possible to substantially simultaneously output the cal 1 and the cal 2. The difference in timing between the cal 1 and the cal 2 corresponds to the transmission delay of the cal 1 and the calculation delay of the cal 2. This method is effective when the calculation time for the cal 2 is short.

When the calculation of the cal 2 is complicated and takes a long time, it is necessary to take the steps from (1) to (11).

In the example shown in Figure 12, the timing for outputting the cal 1 and the cal 2 is determined by the CPU 1 or the CPU 2. In this way, the operational timing can be selected in accordance with the content of control. That is, the operational timing is changed by giving a high priority order to the data transmission of the cal 1 and the IRQ. FLAG, if the control is urgent, and giving a low priority thereto in the case of a comparatively slow control.

Figure 13 shows the structure of a hardware embodiment of the present invention which will now be referred to.

A controller 50 controls an engine to which are connected, for example, an accelerator pedal angle sensor 51, a brake pedal angle sensor 52, a fuel injection valve (injector) 53 for each cylinder, an ignition plug 54 for each cylinder and air flow $Q_a$ meter 55.

A throttle controller 56 is connected to a throttle value 57 having an angle actuator 58.

A knocking sensor 60 (provided in each cylinder) provides signals to a controller 59 which analyses the signals and provides output to the engine controller 50. In this respect, it is necessary to detect a high-speed phenomenon known as knocking, and a high-speed controller 59 is used exclusively for this purpose.

A controller 61 is used for determining crankshaft torque, torque sensors 62(a), 62(b) being connected at opposing ends of the crankshaft. Since the integration of signals indicative of the intervals between explosion strokes for the respective cylinders is necessary for torque detection, the controller 61 is also a high-speed controller.

A controller 63 is used for controlling a transmission which switches a train of gears in the transmission gear box by using a motor actuator. Gear-changing operation is thus carried out at a desired time in dependence upon the automobile operating conditions.

A controller 64 for controlling the vehicle suspension control actuators 65(a) and 65(b) which each respectively change the height of the vehicle and the damping force. Although only the rear wheels are shown in Figure 13, an actuator is also provided at the front wheels with associated sensors. The damping force is controlled by varying the diameter of the orifice of the hydraulic damper by a motor driven actuator as known per se. The height of the vehicle is controlled by providing a cylinder for varying the displacement of a piston by oil pressure as known per se.

A diagnostic controller 67 is used to detect an abnormality in the data on the communication bus 10.

A controller 68 is provided for a memory (not shown) which statistically processes abnormal data or eliminates seriously abnormal data. A display controller 69 is provided for a display 66.

The controllers 50, 56, 59, 61, 63, 64, 67, 68 and 69 are connected with each other by the communication bus 10 through their respective LSIs for serial transmission.

In such a system with each controller distributed, maintenance is simplified. Cooperative control of a plurality of controllers, however, is sometimes necessary in accordance with the content of control, such as data transmission and reception of the results of calculations and simultaneous operational control of elements.

The present invention is aimed at such cooperative control.

Referring to Figure 14, controllers in the form of CPUs 50, 56 and 63 for the engine, the electronically controlled throttle, and the transmission (gear box), respectively, are connected for cooperative communication and operation with each other through the bus interface 10.

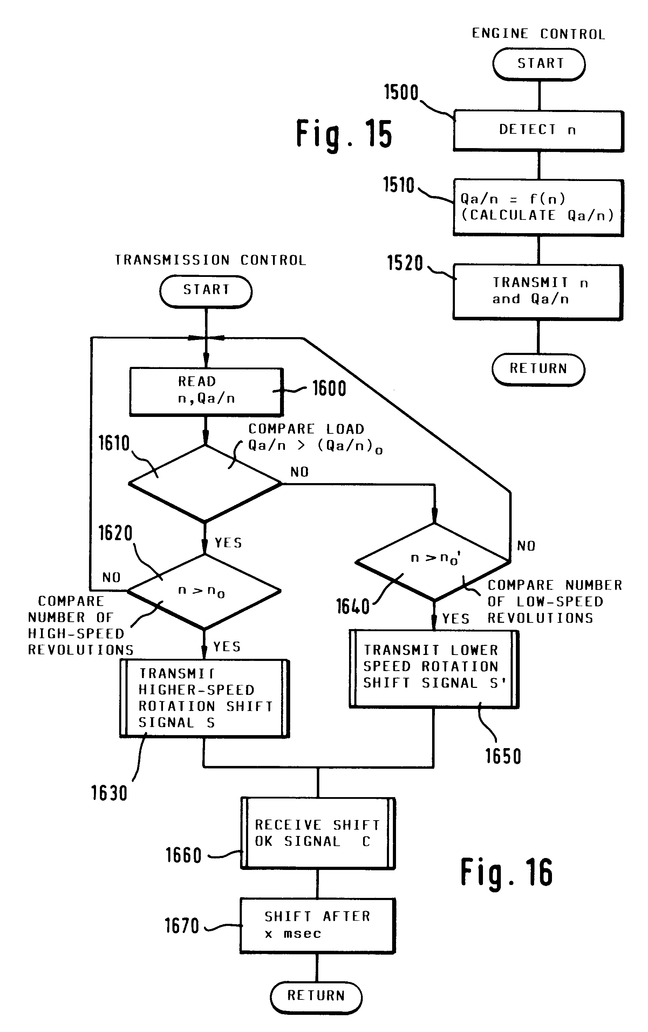

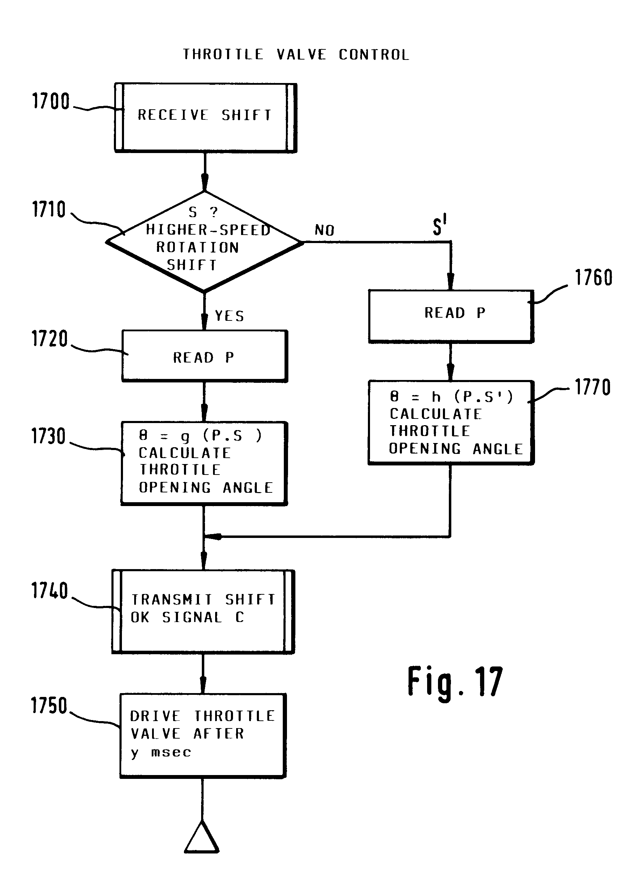

Figures 15 to 17 show flowcharts for the cooperative control of the engine, the throttle valve and the transmission so as to prevent gear shift shock conventionally caused by the drive from the engine. In the engine control shown in Figure 15, the number n of revolutions of the engine is detected at predetermined intervals of time at the step 1500, and the load $Q_a/n$ is calculated from the function f-(n) of n at the step 1510, where $Q_a$ is air flow rate. At the step 1520, n and $Q_a/n$ are transmitted to the throttle valve control unit and the transmission control unit through the bus 10. In the transmission control shown in Figure 16, signals n and $Q_a/n$ are read at the step 1600, and the actual $Q_a/n$ is first compared with a predetermined load $(Q_a/n)_0$ read from a map at the step 1610. If $Q_a/n > (Q_a/n)_0$, the driver requires increased output from the engine, so that a gear shift is carried out to provide a higher speed range of engine revolutions. At the step 1620, the actual number n of revolutions of the engine is compared with a predetermined number $n_0$ of revolutions of the engine in a higher engine speed revolution range, and if $n > n_0$, a higher revolution speed shift signal s is transmitted by interruption to throttle valve control unit through the bus 10 at the step 1630. If $n \leq n_0$, the signals n and $Q_a/n$ are read again. If $Q_a/n \leq (Q_a/n)_0$, since the driver's request for output from the engine is not so great, the shift is carried out in a low revolution speed rotation range. At the step 1640, the actual number n of revolutions of the engine is compared with the set number $n_0'$ of revolutions of the engine in a lower engine speed revolution range, and if $n > n'_0$, a lower revolution speed rotation shift signal s' is transmitted by interruption to throttle valve control unit through the bus 10 at the step 1650. If $n \leq n_0'$, the signals n and $Q_a/n$ are read again. In the throttle valve control shown in Figure 17, an interruption signal is received from the transmission control unit through the bus 10 at the step 1700, whether the signal s is a higher speed rotation gear change signal or a lower speed rotation gear change signal is judged at the step 1710. At the steps 1720, 1730, 1760 and 1770, the gear position P is read, the throttle opening angle $\theta$ is calculated on the basis of P and S, and P and S', respectively. At the step 1740, a gear change OK signal is output by interruption, and at the step 1750, the throttle valve is driven after a predetermined time, for example, after y msec. Returning to Figure 16, when the transmission control unit receives the gear change OK signal C at the step 1660, the gear is changed after x msec at the step 1670. In this case, x may be equal to y.

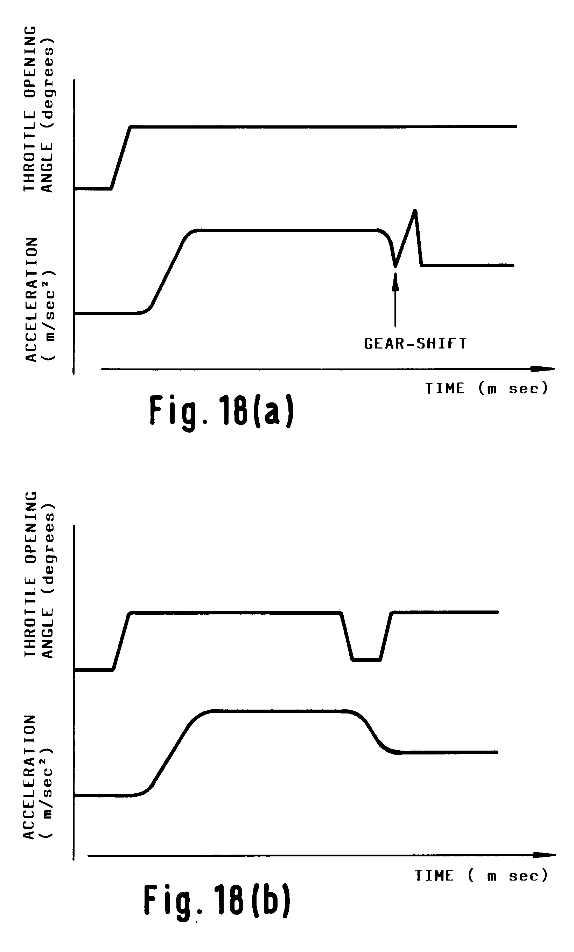

Figures 18(a) and 18(b) are detailed graphical views of a jerk that conventionally occurs when changing gear, wherein Figure 18(a) shows the gear change jerk of a conventional automatic transmission vehicle, and Figure 18(b) shows the gear change jerk reduced by the output of the engine with the increased throttle opening angle of the present invention. The abscissa in Figures 18(a) and 18(b) is time and the upper graphical representation in Figures 18(a) and 18(b) is throttle opening angle and the lower representation in Figures 18(a) and 18(b) has an ordinate of acceleration. In the prior art of Figure 18(a) it will be noted that the throttle opening angle is constant throughout a gear shift and the acceleration after initially rising with the throttle opening angle is then constant and there is then a trough produced when the clutch is disengaged and the gear shift is effected from a lower gear to a higher ratio gear and the clutch then engaged. Following the gear shift to a higher gear there then follows an inertia phase producing an increased acceleration spike before the acceleration is reduced to again be substantially constant. In distinction, in the present invention, as represented by the graphs of Figure 18(b), the throttle opening angle is constant and then when a gear change is effected the throttle opening angle is briefly closed before being opened again. As indicated by the lower representation of Figure 18(b) this results in a smoother gear shift without the acceleration spikes noted in the lower figure of Figure 18(a). When a gear shift down in range, i.e. to a gear suitable for a lower speed range, then the throttle opening in accordance with the present invention is increased at the moment of gear change.

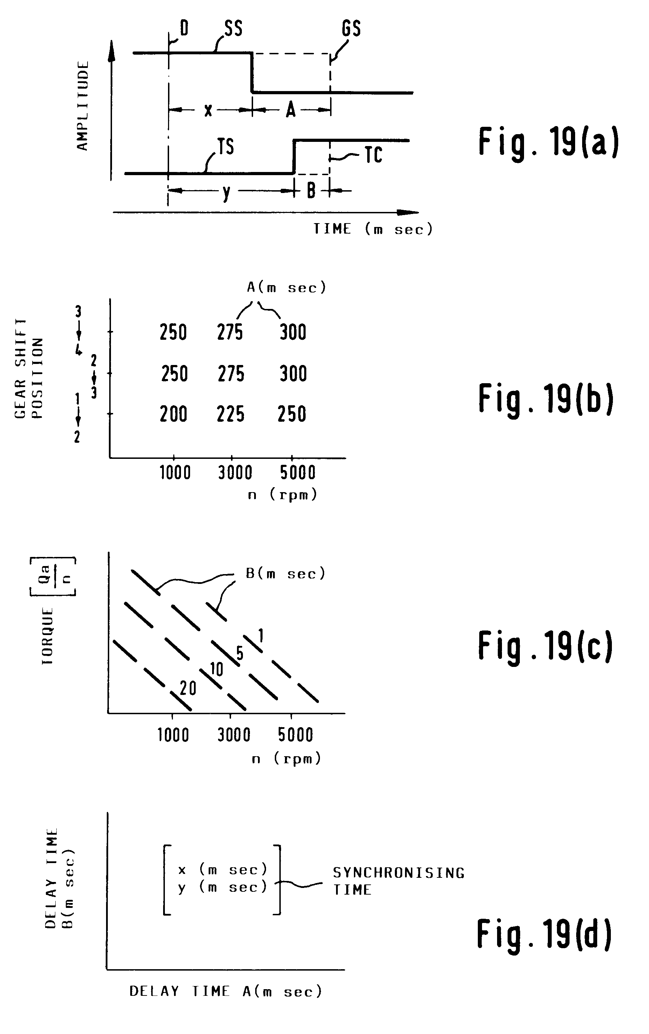

As shown in Figure 19(a), the upper graphical representation shows the delay time A msec of the gear box transmission actuator in that there is a time delay between the actuator being instructed to perform a gear shift and the actuator actually performing the gear shift. Similarly there is a time delay B msec caused by delay in the throttle actuator supplying air $Q_a$. It will be noted that the time delay A and time delay B are different from one another. Because it is desired that the gear shift and throttle be actuated in synchronism with one another to provide a substantially jerk-free gear shift so the present invention sets a datum D from which the gear shift and throttle operations are actually performed so that a time x and time y are respectively required. As will be seen from the map of Figure 19(b) which shows gear shift position with respect to engine rotational speed, the time delay A varies according to the gear shift being effected and the engine speed n. The time A is therefore retrieved from the map shown in Figure 19(b). Similarly the delay time B is obtained from a map of $Q_a/n$ against engine speed n. Having secured data from the maps 19(b) and 19(c) the synchronising times x and y are retrieved from map 19-(d) which is a map of delay time B against delay time A. It will therefore be understood from the above that the gear shift actuator and the throttle valve actuator are able to be operated in synchronism with one another to reduce gear change jerk.

The upper graph of Figure 19(a) shows the gear shift signal SS and the actual time of gear shift GS which is effected after a time lag A. The lower graph of Figure 19(a) shows a throttle signal TS and the time of actual change of the throttle signal, TC, occurring after a time delay B.

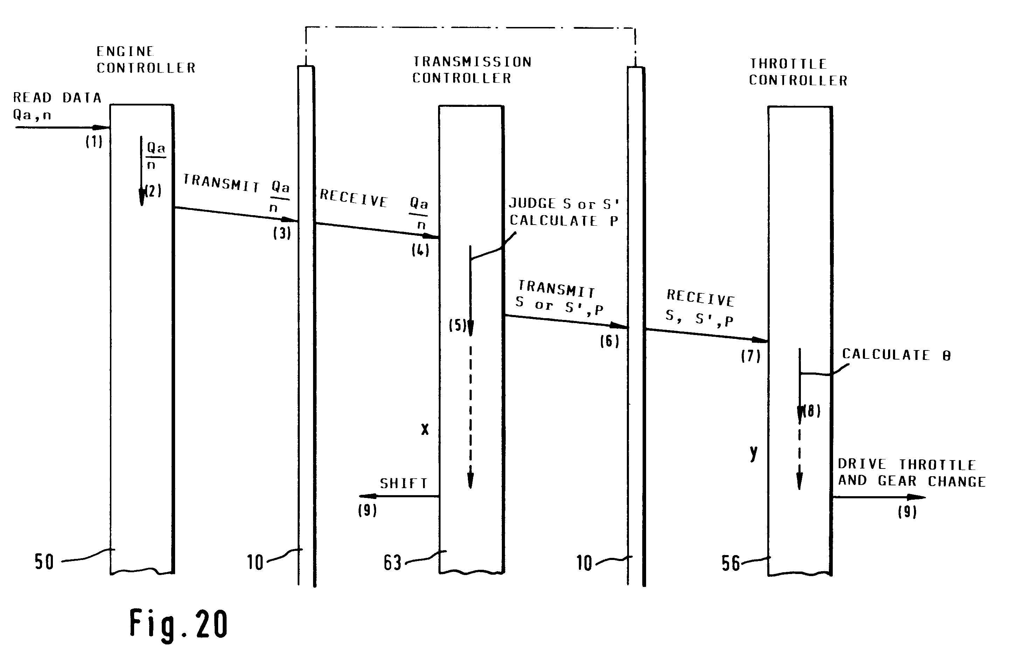

Figure 20 shows the flow of data for the above described operation. The controller 50 for controlling the engine detects (1) the amount of air $Q_a$ and the number n of engine revolutions and calculates (2) the load $Q_a/n$. Thereafter, the load $Q_a/n$ is transmitted (3) to the communication bus 10. The transmission controller 63 receives (4) the load $Q_a/n$ and judges whether a higher revolution speed shift or a lower revolution speed shift is necessary. After the judgment, the signal S or S' which corresponds thereto is calculated (5). When shift is necessary, the shift position P is also calculated (5). The signals S (or S') and P are transmitted (6) to the communication bus 10. The throttle controller 56 receives (7) these signals S (or S') and P and calculates (8) the throttle opening angle $\theta$. The controllers 56 and 63 wait for the time y and x respectively for synchronising the operations of the throttle and the transmission gear change and simultaneously control (9) the throttle actuator and the transmission gear change. In this way, in the gear changing operation, the two controlling operations are completely synchronised. The controllers 56 and 63 synchronously cooperate for the same object and purpose of gear shifting on the basis of the calculated data supplied from the engine controller 50 and the transmission controller 63. The timing for operation is also determined by the controllers 56 and 63.

An apparatus and a method for suppressing the vibration of a vehicle body at the time of rapid acceleration and rapid deceleration by controlling the throttle opening angle, the damping force of the suspension and the height of the vehicle will now be explained.

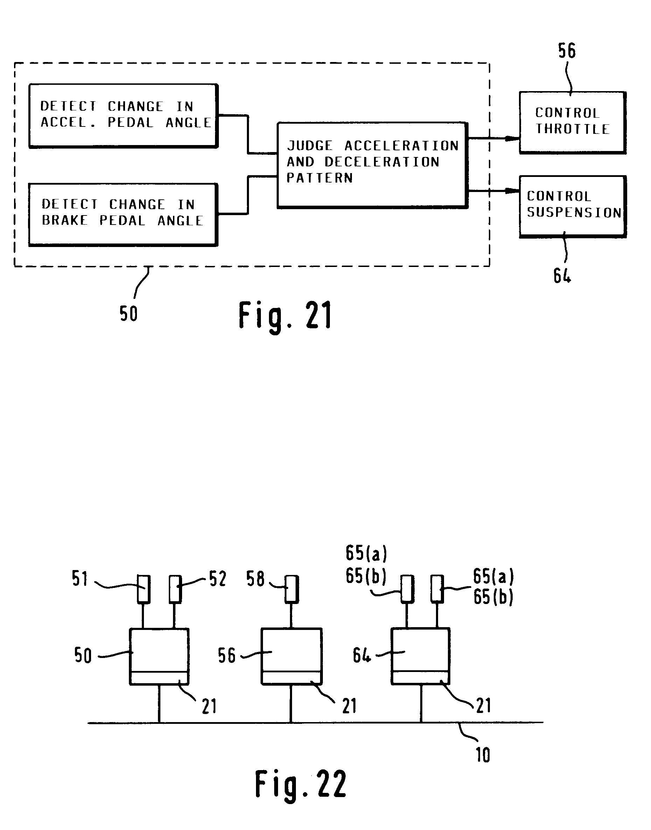

Figure 21 is a block diagram of such an apparatus. In order to judge whether or not there is a rapid acceleration or a rapid deceleration, a change in the accelerator pedal angle and a change in the brake pedal angle are detected. On the basis of these detections, the pattern of acceleration or deceleration is judged. These processings are carried out by the engine controller 50. In accordance with the judged pattern, the throttle opening angle and the suspension are controlled. The controlled variables for the former and the latter are obtained and output to the control units on the basis of the signals from the engine controller 50 by the throttle controller 56 and the suspension controller 64, respectively. In other words, the vibration of the vehicle body is cooperatively controlled by the controllers 56 and 64 on the basis of the data from the controller 50.

Figure 22 shows the arrangement of the controllers 50, 56 and 64. Each controller is connected to the communication bus 10 through a respective communication device 21. The accelerator pedal opening angle sensor 51 and the brake pedal angle sensor 52 are connected to the engine controller 50. The throttle actuator 58 is connected to the throttle controller 56 and the vehicle height controller actuators 65(a) and the damping force controller actuators 65(b) are connected to the suspension controller 64. These three controllers cooperate with each other through the communication bus 10 to provide control for the same purpose, i.e. to control vehicle body vibration.

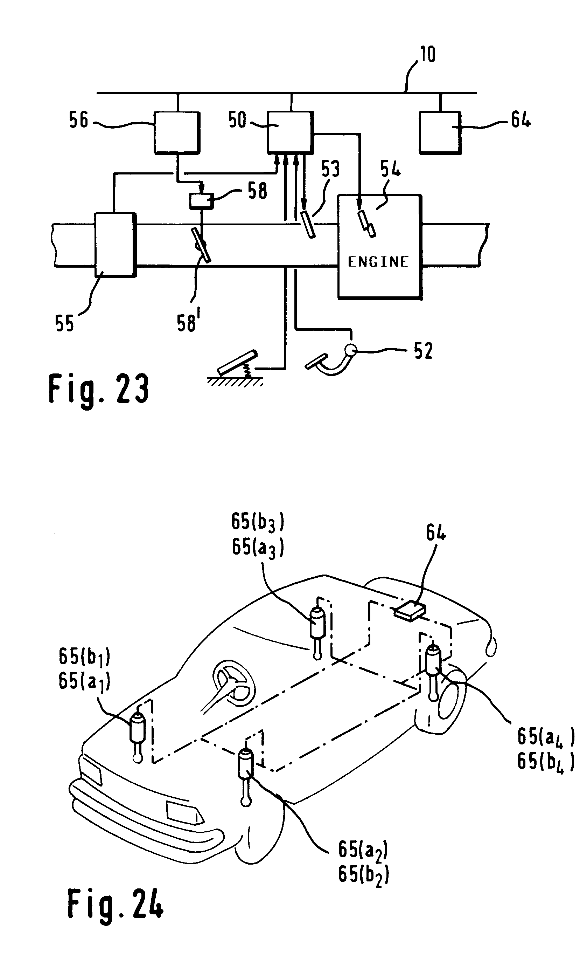

Figure 23 shows the structure of the hardware of the apparatus. The signals of the air flow meter 55, the accelerator pedal angle sensor 51 and the brake pedal angle sensor 52 are input into the controller 50. Signals are output from the controller 50 to the injectors 53 and the ignition plugs 54.

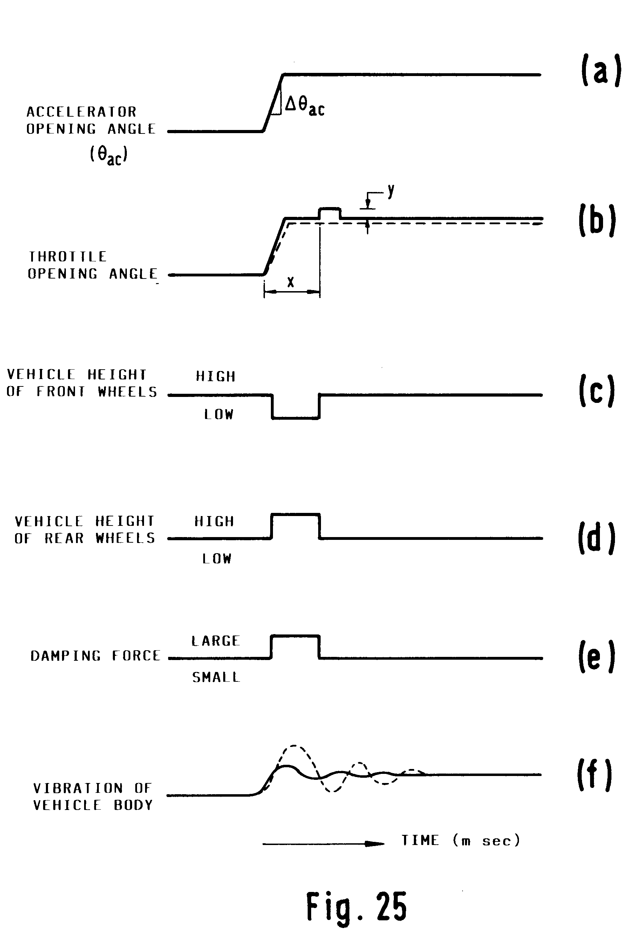

The throttle 58' has an actuator 58 connected to the throttle controller 56. It is possible to control the actuators 65(a1) to 65(a4) and 65(b1) to 65(b4) shown in Figure 24 independently of each other. For example, it is possible to increase only the height of the vehicle for the front wheels or only the height of the right wheels.

Figure 25 shows the serial control of each element in time during rapid acceleration. If the throttle opening angle is operated in proportion to the angle of the accelerator pedal Figure 25(a), as indicated by the broken line in Figure 25(b), without controlling the suspension, the vibration of the vehicle body greatly fluctuates, as shown by the broken line in Figure 25(f).

In contrast, if the throttle is controlled in accordance with a certain pattern as indicated by the solid line in Figure 25(b) and each actuator is so controlled that the vehicle body leans slightly forward as shown by Figures 25(c) and 25(d), the vibration of the vehicle body is reduced, as indicated by the solid line in Figure 25(f). At this time, the damping force of the suspension Figure 25(e) is set at a slightly increased value. The operational pattern of the throttle is determined by the variation $\Delta\theta_{ac}$ in the accelerator pedal angle. The pattern can be changed by varying the operation starting time x and the angular count y of operation, as shown in the throttle opening angle in Figure 25(b). The values x and y are held in memory and determined in accordance with the value of $\Delta\theta_{ac}$.

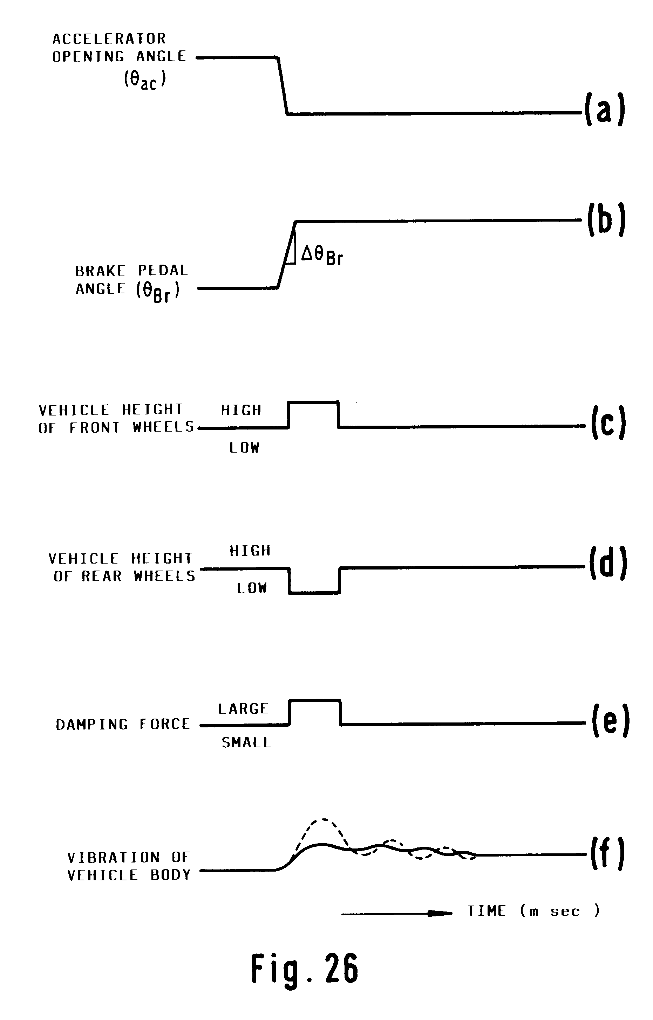

Figure 26 shows the operation of each element at the time of rapid deceleration. Whether or not there is a rapid deceleration is detected from, for example, the variation $\Delta\theta_{Br}$ of the brake pedal angle (Fig 26(b)). In the case of rapid deceleration, the vehicle body leans forwardly. In order to prevent this, the height of the vehicle is so controlled as to be slightly higher for the front wheels relative to that for the rear wheels (Figs 26(e) and (d) respectively). The damping force is also set at slightly increased value (Fig 26(e)). Owing to this control, the vibration of the vehicle body changes as indicated by the solid line in Figure 26(f). Without any control, the vehicle body vibrates as indicated by the broken line in Figure 26(f), which thus demonstrates the effect of the control.

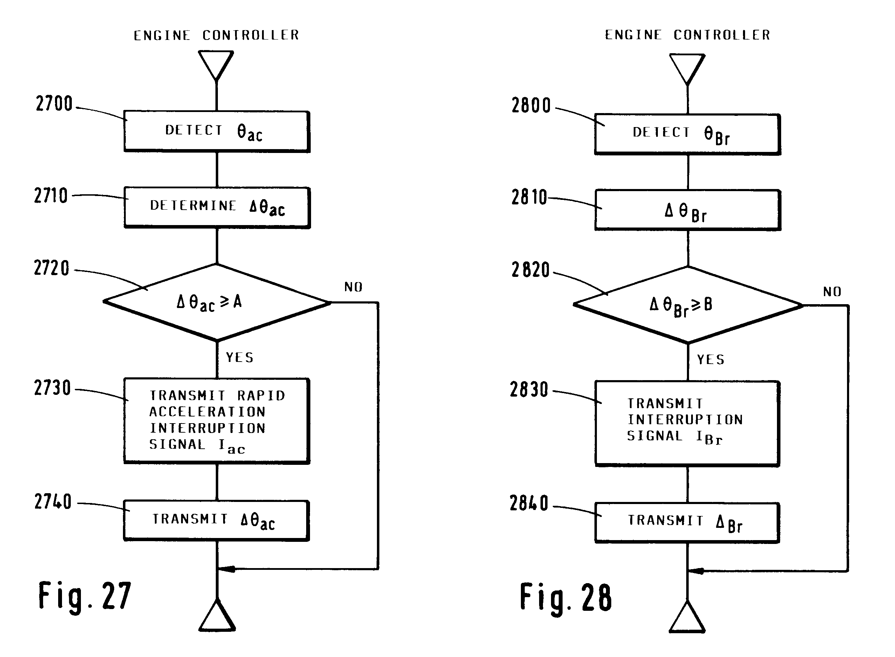

Figure 27 shows the flowchart of these controls.

As shown in Figure 27, the engine controller 50 obtains the variation $\Delta\theta_{ac}$ of the accelerator pedal angle at the steps 2700 and 2710. If the variation is not less than a reference value (A), it is judged that there is a rapid acceleration at the step 2720. In the case of a rapid acceleration, a rapid acceleration interruption signal $I_{ac}$ is transmitted to the other two controllers 56 and 64 at the step 2730. At the step 2740, the variation $\Delta\theta_{ac}$ is also transmitted.

On the other hand, in the case of detecting a sudden deceleration, as shown in Figure 28, the brake pedal angle $\theta_{Br}$ is detected at the step 2800 and $\Delta\theta_{Br}$ is obtained at the step 2810. If $\Delta\theta_{Br}$ is judged to be not less than the reference value B at the step 2820, a sudden deceleration interruption signal $I_{Br}$ is transmitted at the step 2830. At the step 2840, $\Delta\theta_{Br}$ is also transmitted.

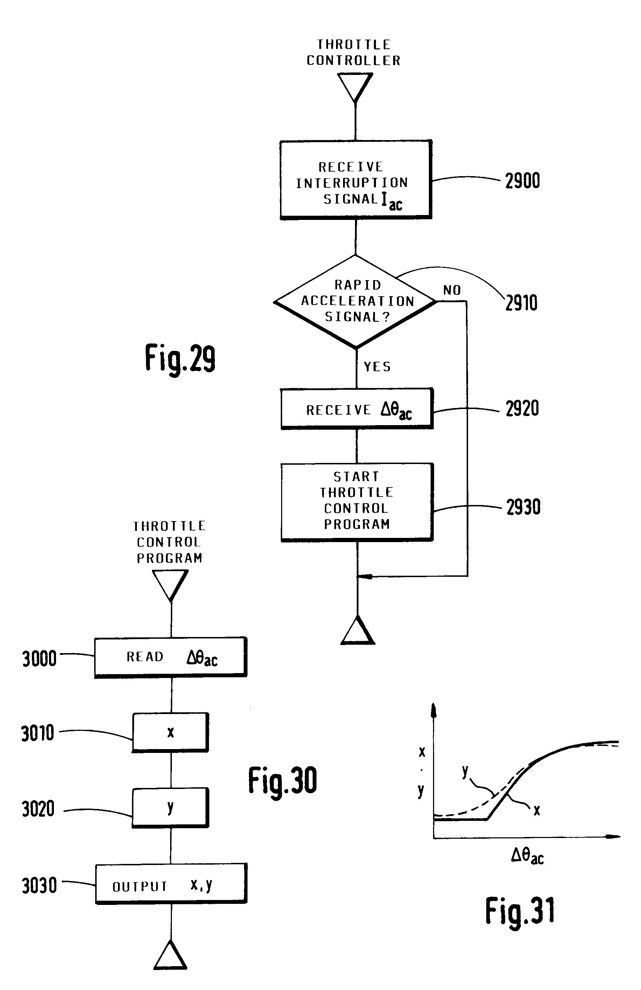

Figure 29 is a flowchart for the throttle controller 56. Whether or not the interruption signal $I_{ac}$ has been received is determined at the step 2900, and whether or not there is a rapid acceleration signal is judged at the step 2910. If there is a rapid acceleration signal, $\Delta\theta_{ac}$ is also received at the step 2920. Thereafter, the throttle control program at the time of rapid acceleration is started at the step 2930.

Figure 30 shows the throttle control program at the time of rapid acceleration. $\Delta\theta_{ac}$ is first read at the step 3000. The values of x and y shown in Figure 25(b), held in memory, correspond to the value of $\Delta\theta_{ac}$, as shown in, for example, the map of Figure 31 and are retrieved at steps 3010 and 3020. The values of x and y are outputted to the actuator at the step 3030, for the throttle control.

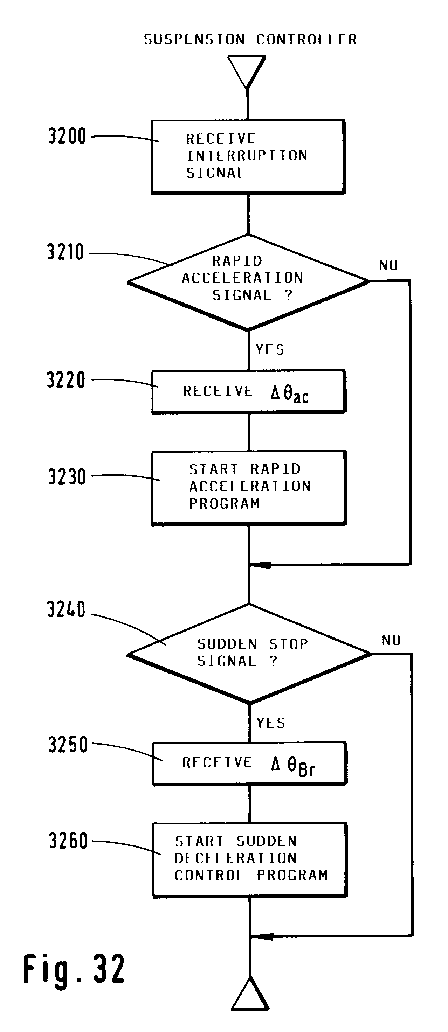

Figure 32 is the flowchart for the suspension controller. If an interruption signal is received at the step 3200 and a rapid acceleration signal is received at the step 3210, $\Delta\theta_{ac}$ is also received at the step 3220. In accordance with this signal, the rapid acceleration control program for controlling the height of the vehicle body and the damping force is started at the step 3230, as shown in Figure 25. On the other hand, if the interruption signal is judged as a sudden deceleration signal at the step 3240, $\Delta\theta_{Br}$ is received at the step 3250. In accordance with this signal, the program for controlling the height of the vehicle and the damping force is started at the step 3260, as shown in Figure 26.

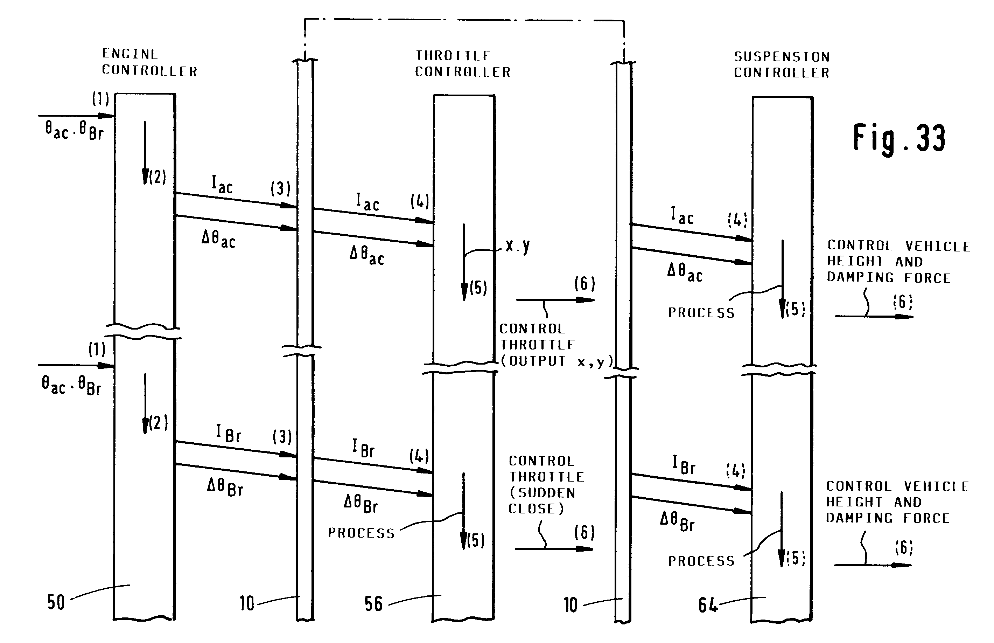

Figure 33 shows the flow of data between the controllers 50, 56 and 64 in serial time. The controller 50 detects (1) $\theta_{ac}$ and $\theta_{Br}$ and judges (2) whether there is a rapid acceleration or a sudden deceleration. In the case of a rapid acceleration, an interruption signal $I_{ac}$ is transmitted (3) and $\Delta\theta_{ac}$ is also transmitted (3). When the interruption signal $I_{ac}$ is received (4), the controllers 56 and 64 substantially synchronously both receive (4) $\Delta\theta_{ac}$ and judge (5) the angle of $\Delta\theta_{ac}$ so as to determine the controlled variables such as x, y and the height of the vehicle and the damping force respectively. These values are output (6) to each control unit.

In the case of a sudden deceleration, if the controller 50 detects (1) and judges (2) that there is a sudden deceleration, an interruption signal $I_{Br}$ is transmitted (3). $\Delta\theta_{Br}$ is also transmitted (3). The subsequent procedures for the suspension controller are similar to (but effectively the reverse of) the case of a rapid acceleration. In the case of a sudden deceleration, the throttle controller 56 outputs a command for rapidly closing the throttle (6).

The cooperative control of the torque detecting controller 61, the transmission controller 63 and the engine controller 50 will now be explained.

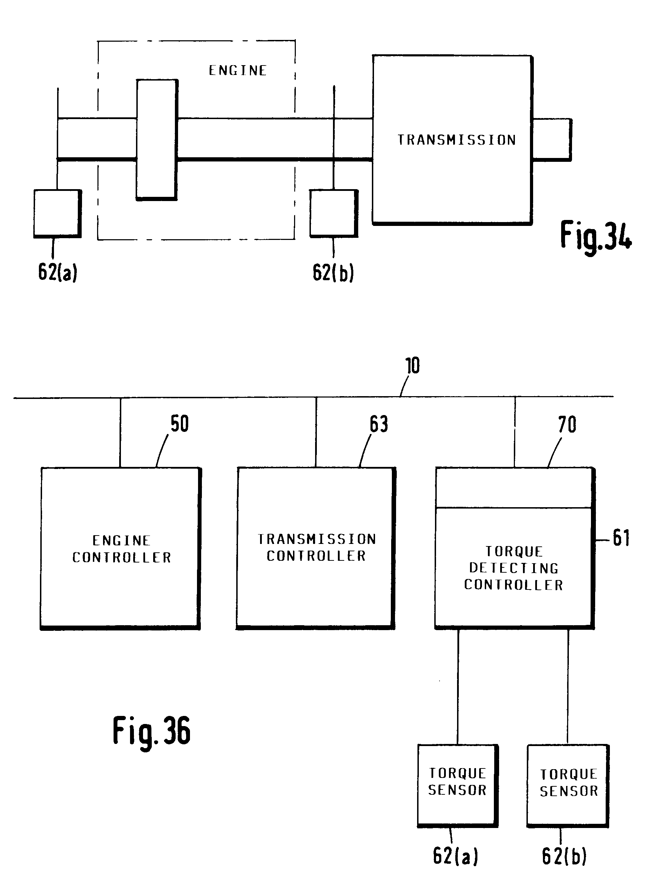

In Figure 34, it is assumed that the torsion angles of crankshaft torsion angle detectors 62(a) and 62(b) are $\theta_1$ and $\theta_2$, and the torque $T_r$ of the crankshaft is represented by the following formula:

$$T_r = k_1 (\theta_1 - \theta_2)$$

wherein $k_1$ represents a proportionality factor.

If the engine torque generated is assumed to be $T_E$, the following relationship holds between $T_E$ and $T$:

$$T_E - T_r = I \frac{d^2\theta_1}{dt^2}$$

wherein $I$ represents a proportional constant.

From these formulae, the following formula holds:

$$T_E = I \frac{d^2\theta_1}{dt^2} + k_1 (\theta_1 - \theta_2)$$

It is therefore possible to obtain $T_E$ by measuring $\theta_1$ and $\theta_2$.

The crankshaft rotational speed $\omega$ is inversely proportional to the period of the crankshaft angle pulse. It is therefore possible to obtain the rotational speed $\omega$ by measuring the period of the angle pulse.

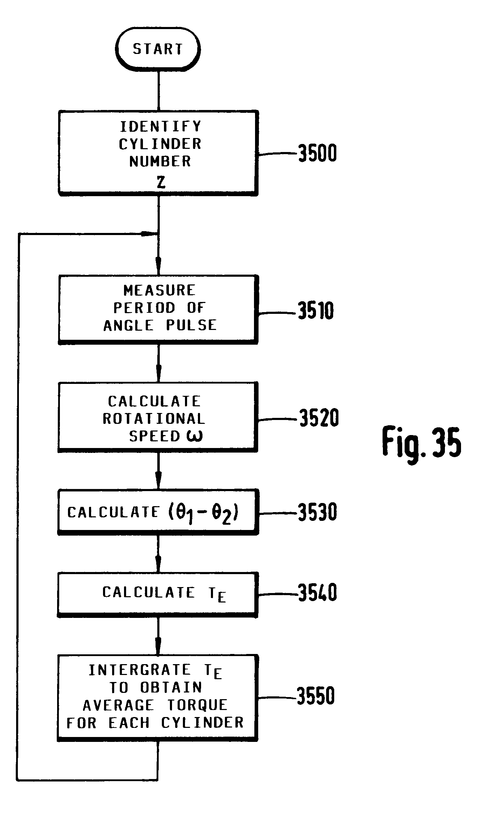

An example of execution of the above calculations is shown in Figure 35.

In the case of a four-cylinder engine, two strokes of expansion and hence ignition are produced per rotation of the crank shaft. It is necessary to identify the cylinder which generates torque at this time. This can be identified from the position of the camshaft. At the step 3500 in Figure 35, the cylinder number Z is identified. When the cylinder 1 is in the explosion stroke, it is assumed that Z = 1. At the step 3510, the period of the angle pulse is measured. The rotational speed $\omega$ is next calculated at the step 3520. $(\theta_1 - \theta_2)$ is then calculated at the step 3530. At the step 3540, $T_E$ is calculated, and the values of $T_E$ are integrated during the explosion stroke and the average value of the torque $\Delta T_E$ of each cylinder is obtained at the step 3550.

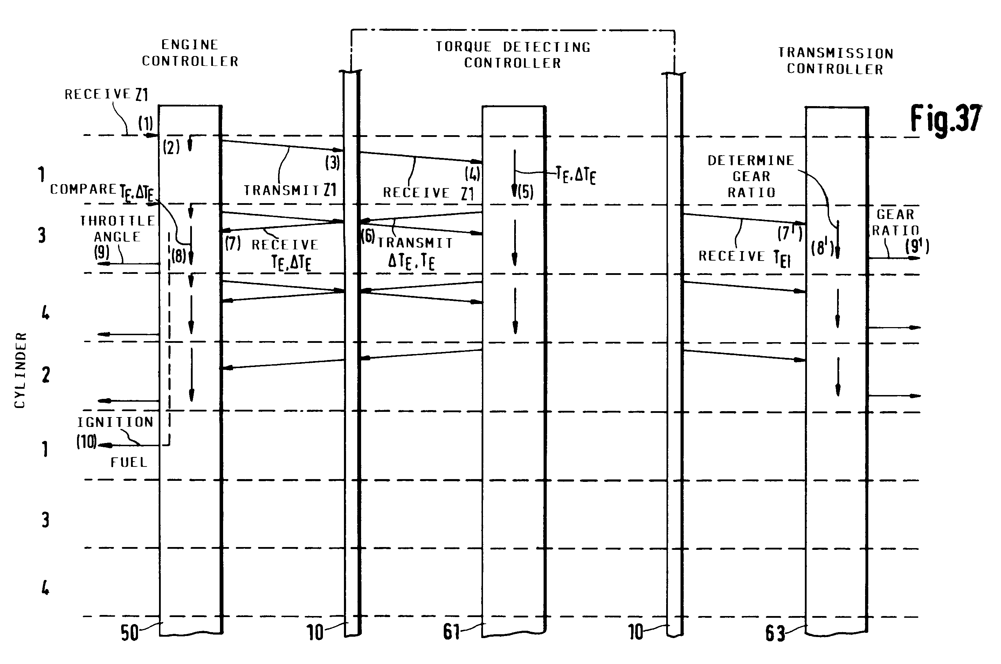

A block schematic of the hardware is shown in Figure 36. The serial communication bus 10 is connected to the engine control unit 50 and the transmission control unit 63. These control units require engine torque information. The engine torque information is obtained by a digital signal processor within controller 61, and is transmitted from an LSI 70 for serial transmission to the control units 50 and 63 through the communication bus 10.

The detectors 62(a) and 62(b) are connected to the processor of controller 61, which executes the calculations in the flowchart shown in Figure 35 so as to obtain the information on the engine torque.

The control unit 50 adjusts the throttle valve opening angle on the basis of the information and so controls the engine torque generated as to be the target value. The control unit 63 switches the gear box transmission on the basis of the information on the torque.

Figure 37 shows the flow of data.

The engine controller reads (1) the signal of the crank angle sensor and judges (2) the cylinder. The cylinder judging signal $Z_1$ (cylinder 1) is transmitted (3) to the communication bus 10. The torque detecting controller 61 receives (4) $Z_1$. The controller 61 also integrates the torques generated during the explosion stroke so as to obtain (5) $T_E$ and $\Delta T_E$. $T_E$ and $\Delta T_E$ are transmitted (6). The engine controller 50 receives (7) $T_E$ and $\Delta T_E$, compares (8) these with the target torque so as to calculate the throttle opening angle. The throttle opening angle is output (9) to the throttle actuator and the results of the calculations for the amount of fuel and ignition timing are output (10) to the injector and the ignition circuit respectively.

The transmission controller 63 receives (7') $T_{E1}$ and so determines (8') the transmission gear ratio that the target torque generates. The determined gear ratio is output (9') to the transmission and a gear shift is performed, if necessary.

In this embodiment, the controllers 50 and 63 cooperate with each other for the control of the gear shift on the basis of the results of the calculations of the torque detecting controller 61.

Thus, from determination of the generated torque by the controller 61, the controllers 50 and 63 cooperate with each other.

The cooperation for the control of engine knocking (pre-detonation) will now be explained.

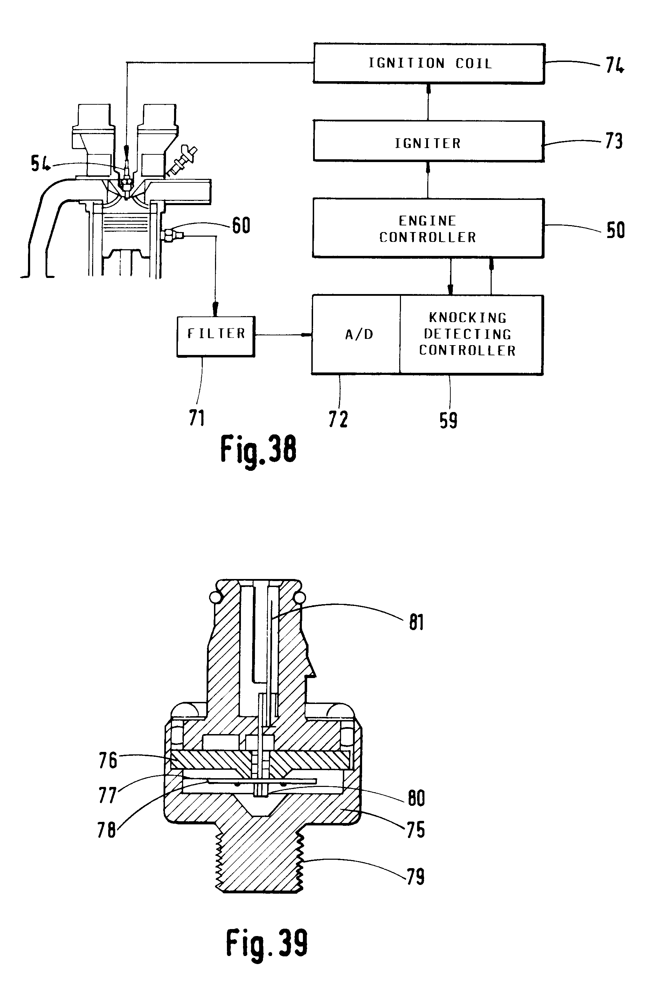

Figure 38 schematically shows an example of the engine knocking control system. The knocking produced in the engine is electrically detected by the knocking sensor 60 mounted on the cylinder block of the engine, and the signal is input into the knocking signal processing controller 59 via a filter 71 and an A/D converter 72 to judge the intensity level of the knocking. The engine controller 50 obtains a predetermined ignition timing for not causing knocking by calculation based on the results of the judgment of the knocking, and controls an igniter 73. In accordance with the ignition signal output from the igniter 73, high voltage ignition energy is supplied from an ignition coil 74 to the ignition plug 54 for ignition at a predetermined ignition timing. Knocking is prominently caused by pre-detonation, i.e. firing occurs at a position ahead of the top dead centre (tdc) of the piston, namely, on the advanced side of tdc. Therefore, in the knocking control method, the knocking is suppressed by delaying the ignition timing when knocking is detected.

Various knocking sensors are proposed. The sensor shown in Figure 39 is used for the system shown in Figure 38 and is generally called an engine block wall vibration detection type sensor known per se. A vibration plate 77 is attached to a base plate 76 in a housing 75 and a piezoelectric element 78 is fixed on the surface of the vibration plate 77. The sensor is mounted on the cylinder block of the engine by an external screw thread 79 of the housing 75. The vibration caused by knocking is transmitted to the base plate 77, and the vibration plate 77 is designed so as to resonate in the vicinity of the frequency of knocking (in the vicinity of about 7 kHz). The torsional force caused by the resonant vibration is received by the piezoelectric element 78 and the vibration amplitude of the electric signal which is proportional to the magnitude of the vibration is output from the piezoelectric element 78 via a terminal 81 and a lead terminal 80.

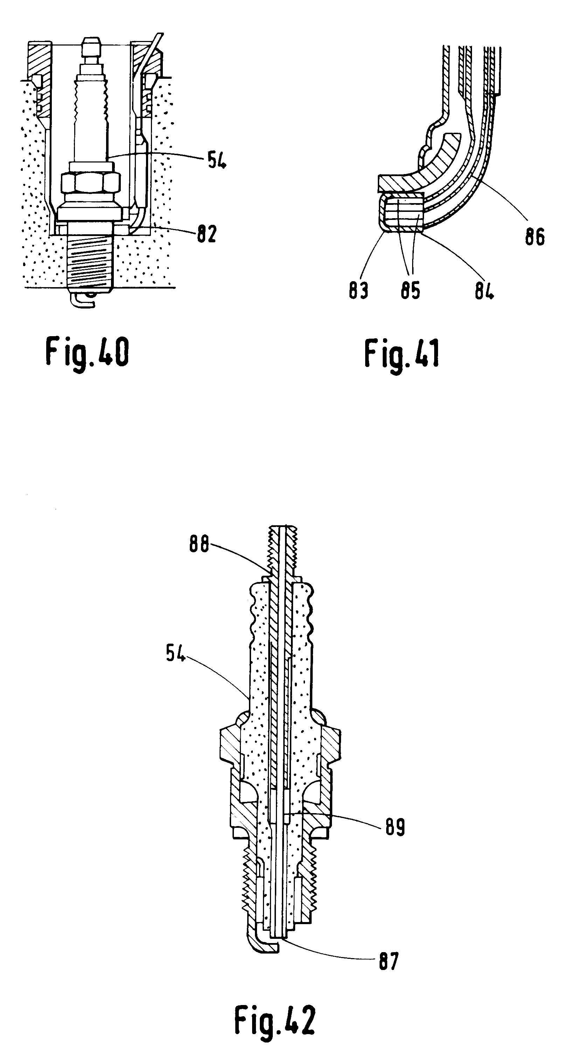

Figure 40 schematically shows a washer type cylinder pressure detection type knocking sensor. The sensor body is disposed on a washer portion 82 of the ignition plug 54. The sensor is mounted on the cylinder head. A part of the sensor body is shown in cross-section in Figure 41. A piezoelectric element 84 is disposed within a case 83 and electrodes 85 are provided on surfaces thereof so as to connect the sensor to a 3-lead wire cable 86.

When cylinder pressure is applied to the ignition plug 54, the plug is lifted to reduce the load applied to the piezoelectric element 85 and from the charge generated by the piezoelectric element cylinder pressure is detected. When knocking is caused, a high-frequency signal component is overlapped with the cylinder pressure. The knocking is detected by the high-frequency signal component.

Figure 42 is a sectional view of the main part of a combustion light detection type knocking sensor known per se. A silica glass fiber 89 is provided in such a manner as to penetrate a central electrode 87 and the high-voltage terminal 88 of the ignition plug 54. The light produced by the flame of combustion is detected and by subjecting the light to optical and electrical processing knocking is detected. When knocking is caused, a high-frequency signal component is overlapped onto the wave form of the light intensity caused by combustion, and the knocking is detected by determining the high-frequency component.

Other types of knock sensors are known, e .g. pressure type sensors using a crystal or the like, ion current detection type sensors for detecting a change in the ion current, etc.

When an engine is driven in a high-load state, a portion which is excessively heated, namely, a hot spot is apt to be produced in the combustion chamber. The hot spot portion tends to be produced at the leading edge in the direction of propagating a flame in the explosion (power) stroke, what is termed in the art as the end gas portion. Knocking is the phenomenon of spontaneous combustion produced at the hot spot of the end gas portion which travels between opposing walls of the combustion chamber at a sonic speed as a shock wave, and is repeatedly reflected between the cylinder walls so as to cause a pressure vibration in the combustion chamber at a high speed.

Therefore, when knocking is produced, the shock wave produces bump sound with the cylinder wall surface, and if knocking is further increased, the temperature of the hot spot may be raised so much as to melt the piston and/or the cylinder, thereby seizing the engine.

In modern high-reving, high-compression ratio and high-output engines, knocking has a higher tendency to be produced and the control for suppressing knocking has become important.

As described above, knocking appears as a pressure vibration caused by the shock wave which moves at sonic speed in the combustion chamber. It is known that the vibration frequency is a function of the sonic speed C in the combustion chamber, the diameter B of the cylinder bore and that the intrinsic vibration frequency $f_R$ is represented by the following formula:

$$f_R = \frac{C}{\pi B} \rho mn$$

wherein $\rho mn$ represents a function determined by the cylinder vibration mode. In a general engine, $f_R$ is given by the frequency mode $f_{10}$ = about 7 kH$_z$ and $f_{20}$ = about 13 kH$_z$. Because knocking is a high-speed phenomenon so a high-speed arithmetic processing portion is necessary in order to detect and process knocking.

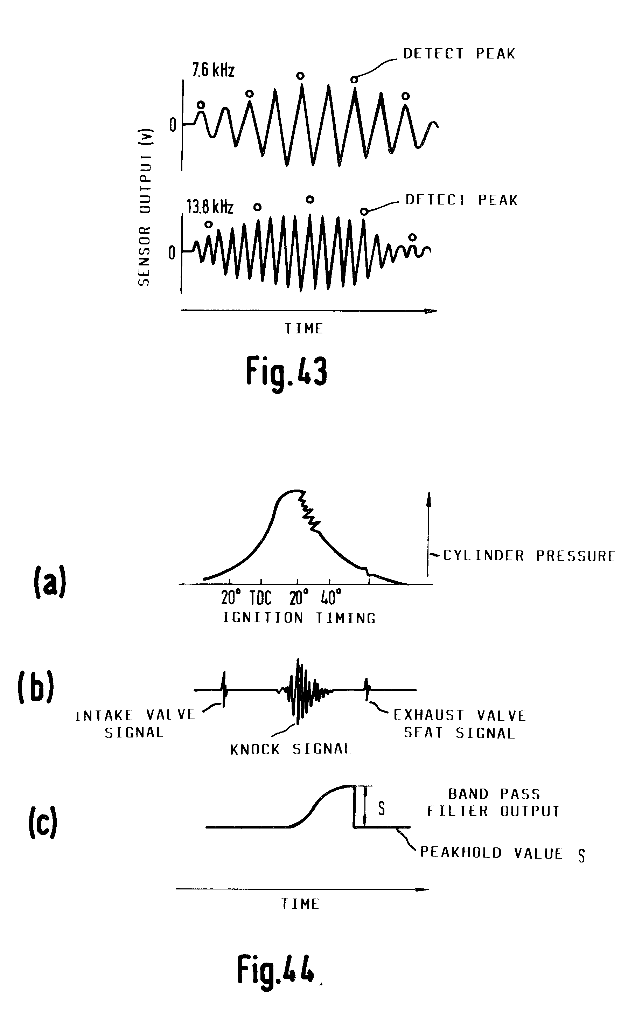

Figure 43 shows the wave forms of two special intrinsic vibration frequency components extracted by a band pass filter from the signals detected by the above-described engine block wall vibration detection type sensor of Figure 39. These knock signal wave forms are extracted for one cycle of the knocking phenomenon. It is desirable that the knocking signal processing controller 59 shown in Figure 38 samples the output wave form at, for example, 15 msec intervals and detects the peak value thereof.

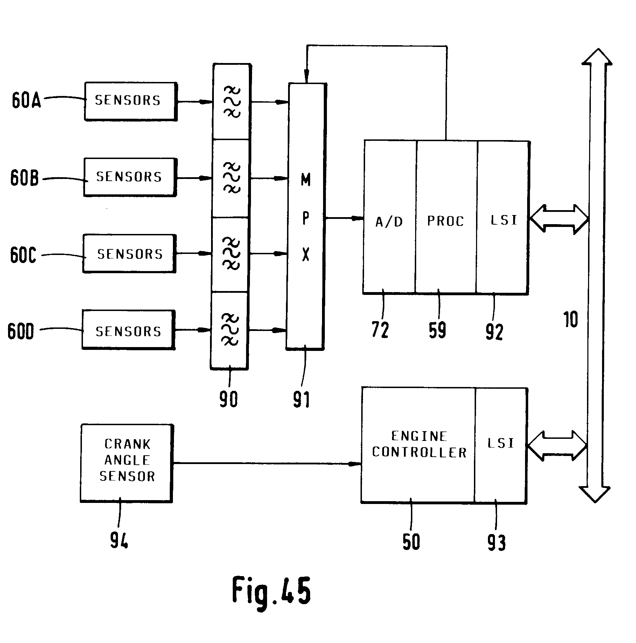

Figure 44 shows signal wave forms detected by the above-described pressure detection type sensor. Figure 44(a) shows a graphical representation having an abscissa of ignition timing against an ordinate of cylinder pressure in which it will be noted that the cylinder pressure is greatest at 20° after TDC. Following peak pressure at ignition there is a high frequency knocking component superimposed on the explosion frequency as indicated on the negative going part of the way for after peak pressure. Figure 44(b) shows the vibration signals caused by the intake valve, the knocking signal and the exhaust valve seat respectively. Figure 44(c) shows the output of a band pass filter through which the output signals of the knocking sensors have been applied and the peak value S is effectively a summation of the peak components shown in Figure 43.

The knocking detection controller will now be more fully explained.

The knocking detection sensor illustrated in Figure 45 is a sensor for a four-cylinder engine but the system is substantially the same irrespective of the number of the cylinders. A knocking sensor is disposed for each cylinder, as indicated by the reference numerals 60A, 60B, 60C and 60D. The detection signal of each knocking sensor is introduced to a multiplexer 91 through a respective band pass filter 90. The multiplexer 91 operates in accordance with the control signal of the knocking signal detecting controller 59, discriminates the signal of the knocking sensor for each cylinder time sequentially and outputs it to the A/D converter 72. The signal of the knocking sensor for each cylinder which is converted into a digital signal is supplied to the knocking signal processing controller 59, which judges knocking for each cylinder and supplies the judgment signal from an LSI 92 for serial transmission to the communication bus 10. A cylinder number judgment signal is supplied from a crank angle sensor 94 to the knocking signal processing controller 59 via the engine controller 50 and an LSI 93 for serial transmission to the communication bus 10. The knocking signal processing controller 59 links the number of the cylinder with the signals from the knocking sensors and judges knocking for each cylinder.

A knocking judgment signal is input from the communication bus 10 to the engine controller 50 through the LSI 93 for serial transmission and the ignition timing value is corrected for each cylinder on the basis of the knocking judgment signal, whereby the ignition timing is corrected and controlled independently for each cylinder.

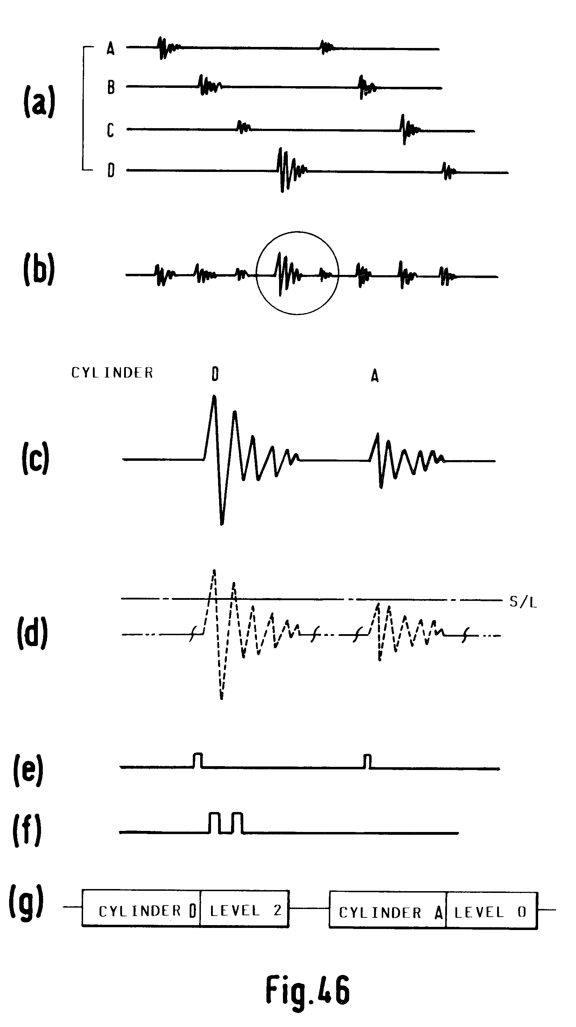

The operation of the apparatus shown in Figure 45 is represented in the time chart of Figure 46. The wave form of the signal of the knocking sensor for each cylinder A, B, C, D is shaped by the band pass filter 90, as shown in Figure 46(a) and is aligned as a signal in time series, as shown in Figure 46(b). A part of the signal enlarged is shown in Figure 46(c). The signal is amplitude sliced at level S/L in Figure 46(d) and the A/D converter 72 converts this sliced signal into a digital signal at predetermined intervals ($\mu$s). The converted value is supplied to the knocking signal processing controller 59, and whether or not there is a larger peak value than the predetermined slice level (S/L) which has been set in advance is judged. If the answer is yes, the same number of the signals above level S/L indicates the intensity of the knocking and the number, shown in Figure 46(f), of the larger peak values which are then output to the communication bus 10 together with the cylinder identification signals, as shown in Figure 46(g). The cylinder identification signal is shown in Figure 46(e).

Since knocking varies for each cycle, averaging and collective processing knocking judgments signals is preferred to supply of a knocking judgment signal to the communication bus for each cycle. More specifically, knocking judgment signals for several cycles or several ten cycles are temporarily stored in the knocking signal processing controller 59 for each cylinder and the final knocking judgment signal obtained from the collective result thereof is supplied to the communication bus.

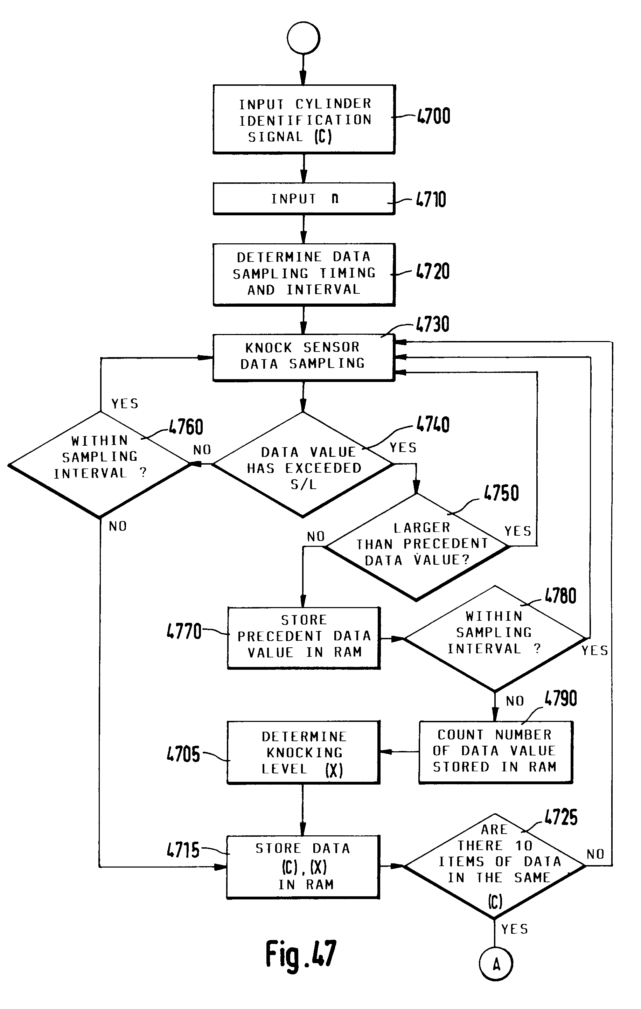

These operations are shown in a flowchart of Figure 47. A cylinder identification signal (C) is first input at the step 4700, and the number n of revolutions of the engine is input at the step 4710. At the step 4720, the time and interval for data sampling are determined from these input (C) and n signals, and the signals from the knocking sensors are sampled at the step 4730. Whether or not the sampled data exceeds the predetermined slice level S/L (shown in Figure 46(d)) is judged at the step 4740. If the answer is yes, the process proceeds to the step 4750. If the answer is not, the process proceeds to the step 4760. At the step 4750, judgment is made as to whether or not the data value is larger than the precedent data value, and if the answer is in the affirmative, the process is returned to the step 4730 to continue the data sampling. If the answer is in the negative, the process proceeds to the step 4770 and the precedent data value is stored in a RAM. At the step 4780, judgment is made as to whether or not the procedure is in the range of the sampling interval determined at the step 4720, and if the answer is yes, the process is returned to the step 4730 for further data sampling. On the other hand, if the sampling interval set at the step 4720 has passed, the process proceeds to the step 4790, and the data values and numbers stored in the RAM at the step 4770 are calculated. At the step 4705, the level (X) of the knocking is determined.

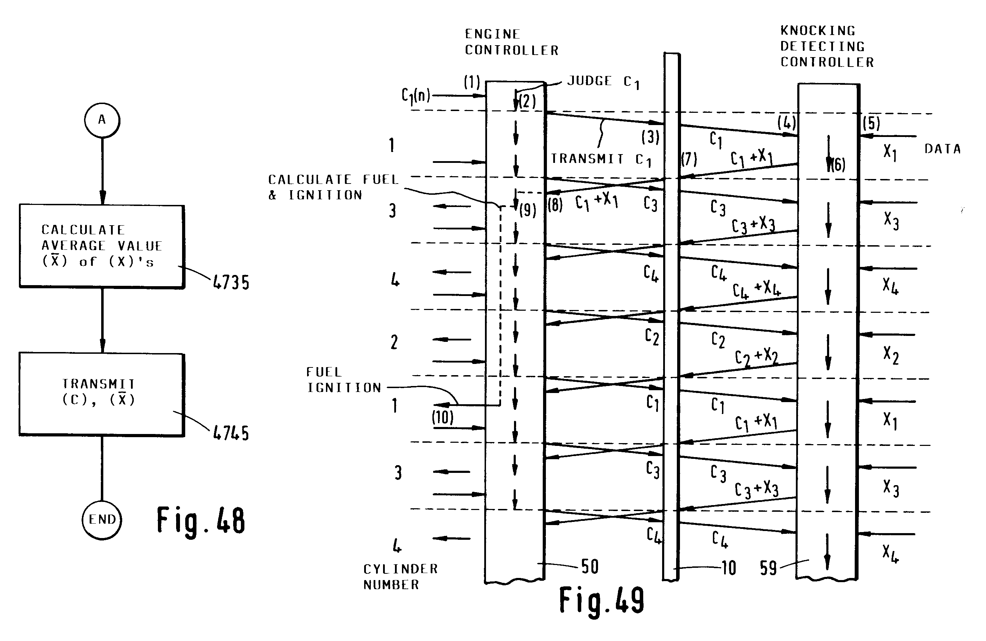

On the other hand, if the value of sampled data is judged not to exceed the slice level S/L at the step 4740, the process proceeds to the step 4760 and judgment is made as to whether or not the procedure is in the range of the sampling interval determined at the step 4720. If the answer is yes, the process is returned to the step 4730 for further data sampling. On the other hand, if the sampling interval has passed, the process proceeds to the step 4715. At the step 4715, the cylinder identification signal (C) and the knocking level (X) input at the step 4700 are temporarily stored in the RAM. At the step 4725, whether or not 10 (X) levels for the same cylinder (C) have been measured, is judged. If the number of (X) levels is less than 10, the process is returned to the step 4730. If the number of (X) levels has reached 10, the process proceeds to the step 4735 shown in Figure 48 to calculate the average value (X) of the (X) levels. That is, the average level of the knocking for a particular cylinder during 10 explosion strokes is calculated. At the step 4745, the cylinder identification signal (C) of the corresponding cylinder and the average level (X) are transmitted to the communication bus 10 in one set.

The flow from the step 4700 to the step 4725 is carried out at each explosion stroke of each cylinder, and the flow from the step 4735 to the step 4745 is carried each time the data values of 10 (X) levels have been collected. After a signal is transmitted to the communication bus 10 at the step 4745, all the memories of the corresponding data values (X) in the RAM are deleted to wait for new data to be input. In the example shown in Figure 47, the number of times for averaging the values is set at 10, but in order to construct a control system attaching great importance to high responsiveness, the number of times is reduced. On the other hand, if stress is laid on controlling the accuracy and the stability, the number of times is increased.

Figure 49 shows the time sequential flow of data. The number n of revolutions and the cylinder identification $C_1$ are first detected (1) by the engine controller 50. Thereafter, the number of the current cylinder is judged (2). $C_1$ represents that the cylinder is the cylinder 1. The signal $C_1$ is then transmitted (3) to the communication bus 10. The knocking detecting controller 59 receives (4) $C_1$ and receives (5) a knocking signal at a predetermined time. The level of the knocking is next judged (6). The judged level is assumed here to be $X_1$. The knocking detecting controller 59 adds the knocking level signal $X_1$ to the cylinder identification signal $C_1$, and they are transmitted (7) to the communication bus 10 as one item of data. The engine controller 50 receives (8) the data $C_1 + X_1$. The engine controller 50 determines (9) the amount of fuel to be supplied (time for opening the injection valve) and the ignition timing. The values determined here are retained for use until the next power stroke for the particular cylinder being considered. When the time arrives for the next power stroke for the particular cylinder, the fuel is supplied and the cylinder is ignited (10) on the basis of the retained data. The same operations are repeated for the other cylinders.

In this example, the engine controller 50 and the knocking detecting controller 59 cooperate with each other for the same object/purpose of knocking control.

Since knocking processing is required at the time of high-speed engine rotation, so it is necessary to provide the knocking detecting controller exclusively for that purpose, as in the above described embodiment.

A diagnostic controller will now be described.

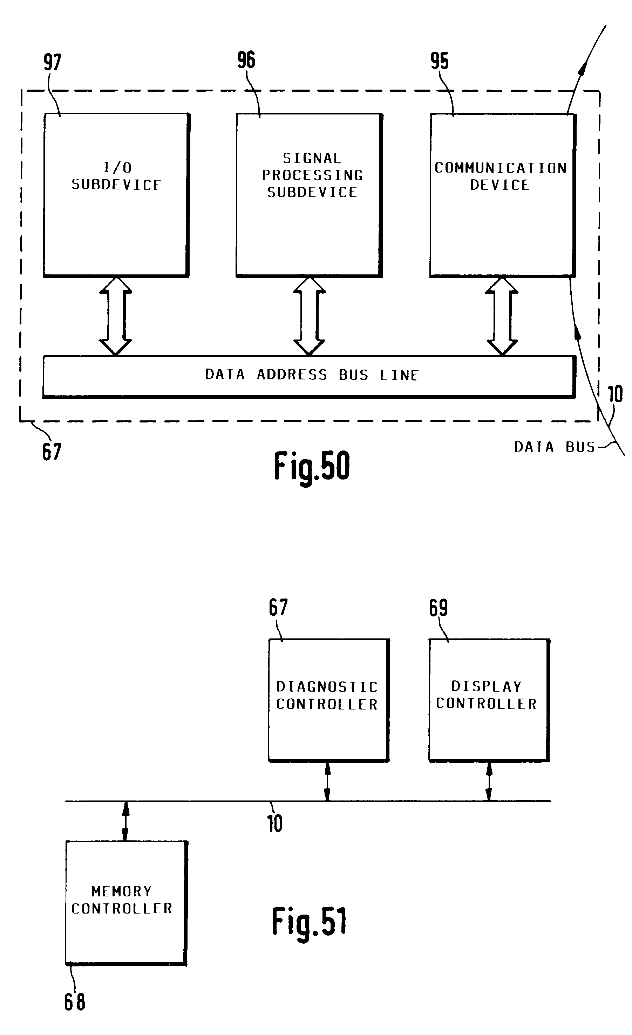

Figure 50 shows a block diagram of a diagnostic controller. The diagnostic controller 67 has a communication device 95 for receiving and transmitting the data on the communication bus 10, a signal processing subdevice 96 for executing the signal processing of the data and an I/O subdevice 97 for receiving an external signal (analog, digital). The signal processing subdevice 96 is, for example, a microcomputer.

Figure 51 shows the structure of the diagnostic controller system with the controller 67 shown in Figure 50 provided therein. In this system, the diagnostic controller 67, a display controller 69 and a memory controller 68 are connected with each other through the communication bus 10. The display controller 69 and/or the memory controller 68 is also provided with the signal processing subdevice 96 therein, as shown in Figure 50.

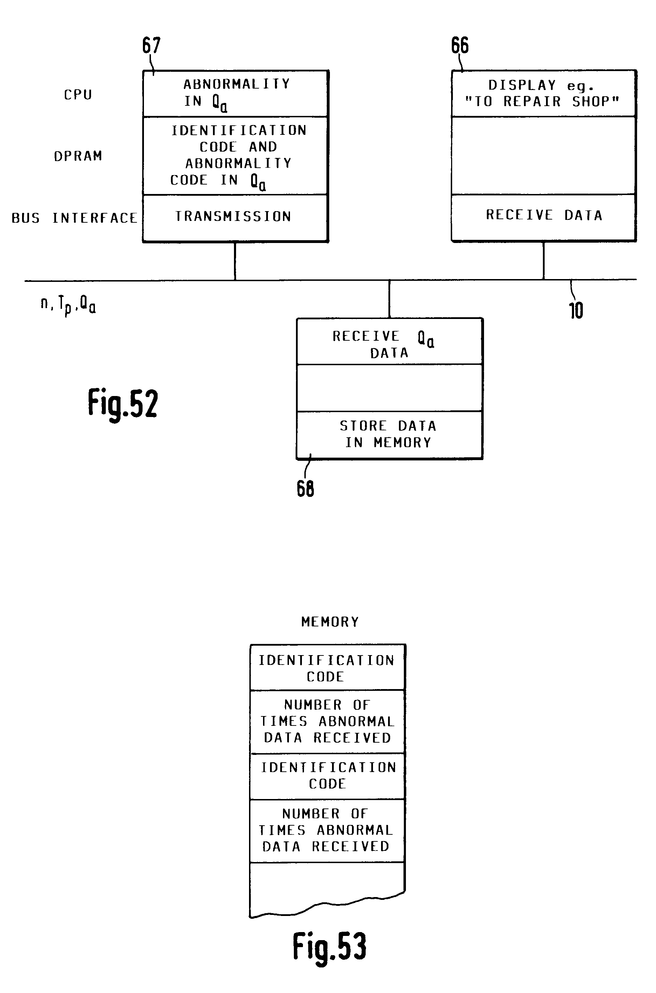

Figure 52 shows an example of signal processing. It is assumed that the signals of the number n of engine revolutions, the injection pulse width $T_p$ and the amount $Q_a$ of air are supplied. If, for example, the diagnostic controller 67 judges the signal $Q_a$ to be abnormal, an abnormal code is added to the data $Q_a$ before it is transmitted. The memory controller 68 receives the data $Q_a$ and if the abnormal code is added thereto, the identification code is stored in the memory. In addition, the number of times of receiving abnormal data is stored in the memory. When the number of times of reception exceeds a predetermined number of times stored in the memory of the memory controller 68, the display code is added to the data. The display controller 69 (shown in Figure 13) which has received the data, provides an output over bus 10 to display 66 which provides a visual display on the basis of the data.

Figure 53 shows an example of the structure of the memory controller memory. The identification code for the data and the number of times of receiving abnormal data are stored in different memories for the respective codes.

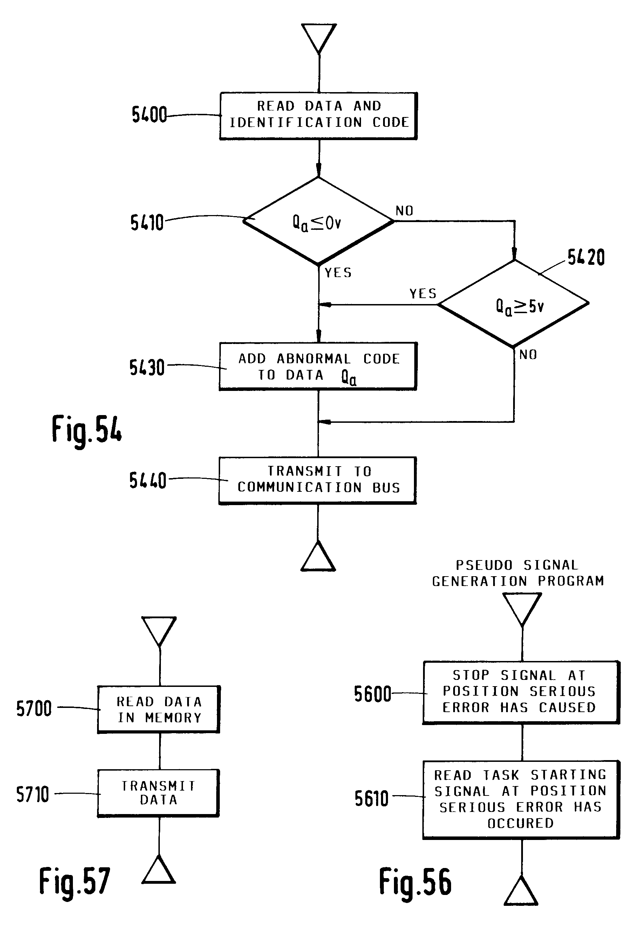

Figure 54 shows an example of a flowchart of the diagnostic controller. At the step 5400, data and the identification code are read, and at the steps 5410 and 5420, signals are judged. For example, if the signal $Q_a$ is 0 V (step 5410) or not less than 5 V (step 5420), it is judged to be abnormal, and an abnormal code is added to the signal $Q_a$ at the step 5430. At the step 5440, the signal is transmitted to the communication bus (step 5440). If no abnormality is found, the signal $Q_a$ is supplied as it is to the communication bus as the data.

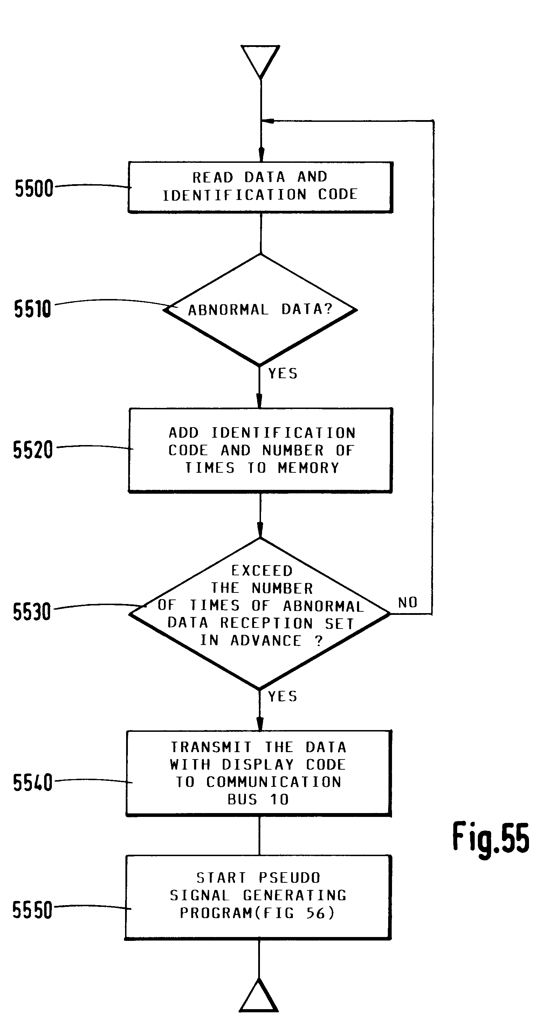

Figure 55 is a flowchart of the memory controller. At the step 5500, a data identification code and the data are read. If the data is judged to be abnormal at the step 5510, the identification code and the number of times are added to the memory at the step 5520. If the number of times exceeds the predetermined number of times which has been determined in advance for each identification code (and each kind of data) at the step 5530, the display code is added to the data before it is transmitted to the communication bus 10 (step 5540). Thereafter, at the step 5550, a pseudo signal generation program is started. This program is required to enable the vehicle to continue to operate until the fault can be rectified.

Figure 56 shows a pseudo signal generation program. This is a program for separating the location at which a serious error (e.g. trouble in the sensor or broken connection) is judged to have been caused by the statistical processing of errors from the control routine and generating a pseudo signal at the same time as the task processing timing for the location at which the error has been caused. In this way, a self-reliance run is enabled to a certain extent.

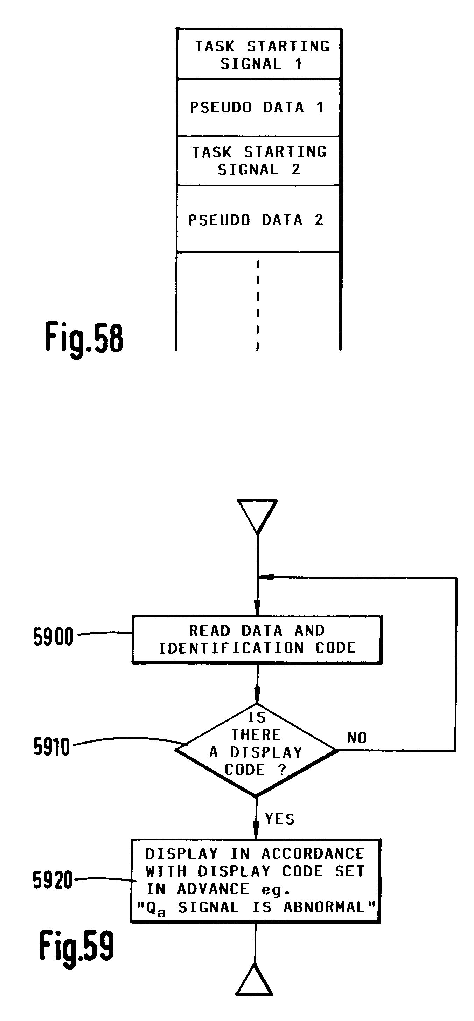

When this program is started, as shown in Figure 56, a command for not generating a signal at the location at which the serious error has been caused is output at the step 5600. At the step 5610, the task processing timing for the signal is read from the memory corresponding to the location and is stored in the task scheduler of the memory controller 68. Thereafter, as shown in Figure 57, every time the program is started at the tuning, the pseudo data in the memory corresponding to the location for the error is read at the step 5700, and it is transmitted to the communication bus 10 at the step 5710. The configuration in which the pseudo data is stored is shown in Figure 58. The pseudo data for the locations which are serious for driving the vehicle are stored in the controller 68 together with the task starting signal.

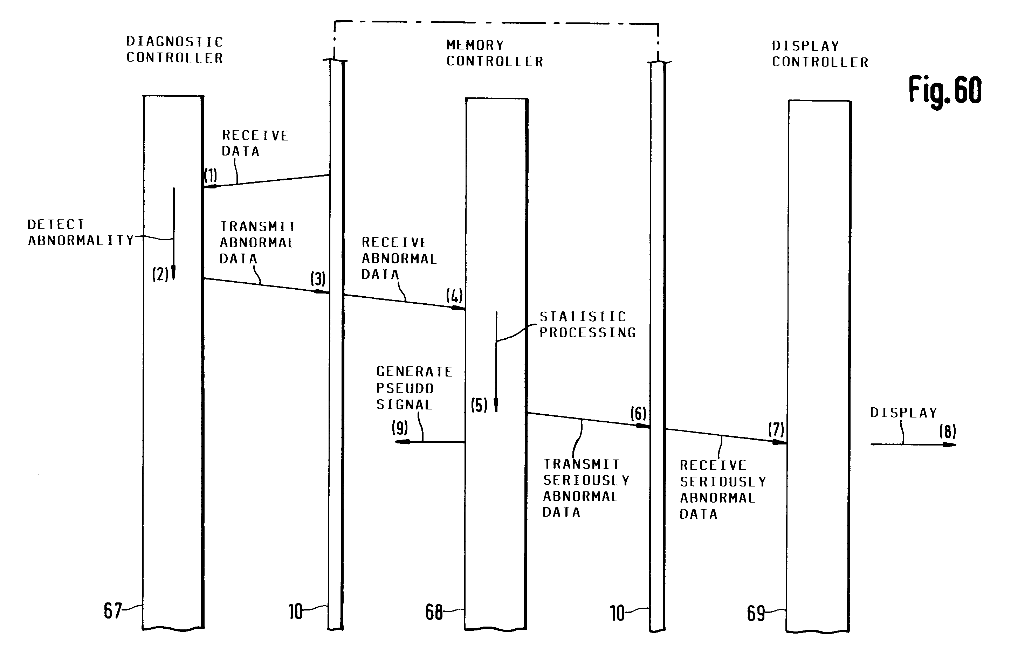

Figure 59 is a flowchart of display. At the step 5900, a data identification code and the data are read and at the step 5910, the presence or absence of the display code is checked. At the step 5920, the data is displayed on the display on the basis of the display code.

In the above-described system, it is possible to synthetically judge the main cause of trouble by the built-in controller on the basis of the identification code and the abnormal data stored in the memory.

The signal $Q_a$ is used as an example at step 5920, but the invention may be applied to the number of revolutions of the engine n, the water temperature in the radiator, the electrolyte level of the battery, the battery voltage, the injection pulse width, the air fuel ratio, etc.

Figure 60 shows the time sequential flow of data. The diagnostic controller 67 receives (1) various kinds of data and judges (2) whether or not the data is abnormal. Abnormal data is supplied (3) with abnormal signals added thereto. The memory controller 68 receives (4) abnormal data and statistically processes (5) it. As a result, seriously abnormal data is transferred (6, 7) to the display controller 69. The display controller 69 displays (8) the fault. On the other hand, the memory controller 68 generates (9) a pseudo signal of the location at which a serious error has been generated.

In this example, the three controllers 67, 68 and 69 cooperate with each other in the detection of abnormality, statistical processing, display, and the generation of a pseudo signal.

It will be realised by those skilled in the art that the number of controllers used may be varied and the functions controlled may be altered from those described above in the exemplary embodiments.

Having now described the invention, it will be understood that since it is possible to assign the processing which is required to be executed at a high speed to a controller provided exclusively therefor separately from other controllers, the accuracy and increased speed of automotive control is realised.

**Claims**

1. A vehicle control apparatus including:

first and second adjusting means (58, 53, 62(a), 62(b)) for adjusting first and second controlled parameters of a vehicle, respectively;

first and second control means (56, 63), connected to said first and second adjusting means (58, 53, 62(a), 62(b)), for controlling said first and second adjusting means, respectively;

a signal communication path (10) interconnecting said first and second control means; and

transferring means (21, 24) for transferring a signal from said first control means to said second control means over said communication path, said signal being determined by said first control means and being representative of a condition to be controlled;

characterized in that said first control means (56) executes a processing for calculating the first controlled parameter on the basis of data supplied, judges, on the basis of the thus calculated first controlled parameter, whether or not said second control means (63) has to operate in cooperation with said first control means, and produces, if the cooperative operation is required, an output signal including an instruction indicative of a cooperative request to said communication path; and

said second control means (63) executes a processing operation for calculating the second controlled parameter in response to the output signal including the instruction indicative of the cooperative request produced by said first control means (56); and in that

said first and second adjusting means (58, 53, 62(a), 62(b)) control the first and second controlled parameters associated therewith simultaneously and in accordance with the processing results of the respective first and second control means.

2. An apparatus as claimed in claim 1 wherein there is provided more than two adjusting means (58, 53, 62(a), 62(b), 65(a), 65(b)), each for adjusting a respective parameter of said vehicle and each adjusting means being arranged to be controlled by a respective control means (56, 63, 64), all of said control means being interconnected to one another by said communication path (10), said transferring means being arranged to transfer data over said communication path of a condition representative of a condition to be controlled determined by one of said control means to selected other said control means, whereby said one of said control means and all of said selected other control means control their respective adjusting means in unison.

3. An apparatus as claimed in claim 1 or claim 2 wherein means are provided for according a priority to signals passed over said communication path.

4. An apparatus as claimed in any preceding claim wherein the signal communication path is a data highway and said control means are microprocessors.

5. An apparatus as claimed in any preceding claim wherein said adjusting means include at least one of a throttle actuator (58), a fuel injector vehicle suspension damper means, vehicle suspension height setting means.

6. An apparatus as claimed in any of claim 1 to 4 wherein said control means include an engine controller (50) for controlling engine parameters, a transmission controller (63) for controlling a gear shift operation and a throttle controller (56) for controlling a throttle opening angle, said engine controller (50) being adapted to read engine data including air quantity and engine speed, calculate engine torque and to transmit said torque calculation over said communication path to said transmission controller (63), said transmission controller (63) being adapted to evaluate an appropriate gear ratio and in dependence thereon to drive a gear shift actuator to effect a gear shift whereby if said transmission controller (63) determines that a gear shift is required, said transmission controller (63) is adapted to output a signal over said communication path to said throttle controller (56) whereby said throttle controller (56) is arranged to actuate a throttle actuator to open the throttle to a required angle to effect a substantially jerk-free gear shift, said gear shift actuator and said throttle actuator acting in synchronism with one another.

7. An apparatus as claimed in any of claims 1 to 4 wherein the control means includes an engine controller (50), a throttle controller (56) and a suspension controller (64), said engine controller being adapted to receive signals from an accelerator pedal angle sensor and a brake pedal angle sensor, said engine controller being adapted to provide a signal indicative of the accelerator pedal angle or of the brake pedal angle over the communication path (10) to the throttle controller (56) and synchronously to the suspension controller (64), said throttle controller being adapted to control a throttle actuator and said suspension controller (64) being arranged to control the vehicle ride height and suspension damping force.

8. An apparatus as claimed in claim 7 wherein the suspension controller (64) is arranged to control vehicle height actuators (65 (a)) and damping force actuators (65(b)) whereby when the vehicle is accelerating the controller (64) is arranged to cause the front vehicle dampers to decrease their ride height, the rear vehicle dampers (65(a)) to increase their ride height and for the damping force actuator (65(b)) to stiffen, and when braking is detected by the suspension controller, said suspension controller is arranged to cause the front vehicle dampers to increase their ride height and the rear vehicle dampers (65(a)) to decrease their ride height, and the damping force actuator (65(b)) to stiffen.

9. An apparatus as claimed in any of claims 1 to 4 wherein the control means includes an engine controller (50), a torque detecting controller (61) and a transmission controller (63), said engine controller is connected to a means for determining a cylinder causing a power stroke and said engine controller is adapted to output a signal indicative of said cylinder causing a power stroke to said torque controller (61), said torque controller is connected to engine crankshaft torque sensors (62(a), 62(b)) and is adapted to evaluate the engine torque, and to transmit a signal representative thereof over said communication path (10) to said transmission controller (63) and to said engine controller, whereupon the engine controller (50) is adapted to compare the evaluated torque signal with predetermined torque values to thereby calculate the required amount of throttle opening and substantially synchronously therewith the transmission controller is adapted to determine an appropriate gear ratio in dependence upon the evaluated torque signal from the torque controller (61).

10. An apparatus as claimed in clailm 1 wherein the control means include an engine controller (50) and a knock detecting controller (59), the engine controller being connected to a sensing means for sensing a cylinder causing a power stroke and to an actuator means for controlling fuel injection pulse width and ignition timing, said knock detecting controller being connected to a knock sensor (Figure 39, Figure 40, Figure 42), said engine controller being adapted to determine a cylinder causing a power stroke and to transmit a signal indicative thereof over said communication path (10) to the knock detecting controller (59), said knock detecting controller (59) being arranged to detect the level of knocking from the knock sensor and to transmit a signal representative thereof in combination with a cylinder identification signal over said communication path (10) to the engine controller, whereby said engine controller is adapted to calculate the fuel injector pulse width and the ignition timing for said actuator means.

11. An apparatus as claimed in claim 1 wherein the control means include a diagnostic controller (67) connected to a plurality of sensors indicative of respective operating states of said vehicle, a memory controller (68) for holding predetermined data values, and a display controller (69) for controlling a display (66), the controllers being interconnected over said communication path (10), whereby said diagnostic controller is adapted to receive data over said communication path (10) from said sensors to detect an abnormality, said abnormality subsequently being transmitted over said communication path (10) to said memory controller, said memory controller being adapted to statistically evaluate received data and to transmit a signal over said communication path (10) to the display controller (69) which is adapted to drive said display, and said memory controller (68) is adapted to produce a pseudo signal to facilitate continued operation of the vehicle in the event that a serious abnormality is detected.

12. An apparatus as claimed in claim 11 wherein said memory controller is arranged to output a signal to the display controller and produce the pseudo signal only when abnormal data has been received in excess of a predetermined number of times.

13. A method of controlling a vehicle including:
adjusting first and second controlled parameters of a vehicle with first and second adjusting means, respectively;
controlling said first and second adjusting means with first and second control means, respectively;
providing a signal communication path interconnecting said first and second control means; and
transferring a signal from said first control means to said second control means over said communication path, said signal being determined by said first control means and being representative of a condition to be controlled; characterized by the further steps of
executing a processing in said first control means for calculating the first controlled parameter on the basis of data supplied and judging on the basis of the thus calculated first controlled parameter whether or not said second control means has to operate in cooperation with the first control means, said first control means producing, if the cooperative operation is required, an output signal including an instruction indicative of a cooperative request to said second control means over a communication path;
executing a processing operation in said second control means for calculating the second controlled parameter in response to the output signal including the instruction indicative of the cooperative request produced by said first control means; and

controlling the first and second controlled parameters by said first and second adjusting means simultaneously and in accordance with the processing results of the respective first and second control means.

## Patentansprüche

1. Fahrzeug-Steuervorrichtung, mit:

ersten und zweiten Einstellungseinrichtungen (58, 53, 62(a), 62(b)) zur Einstellung erster bzw. zweiter regelbarer Parameter eines Fahrzeuges;

ersten und zweiten Regeleinrichtungen (56, 63), die mit den ersten und zweiten Einstellungseinrichtungen (58, 53, 62(a), 62(b)) verbunden sind, so daß sie die ersten und zweiten entsprechend Einstellungseinrichtungen regeln;

einem Signalübertragungsweg (10), der die ersten und zweiten Regeleinrichtungen miteinander verbindet; und

Übertragungseinrichtungen (21, 24) zur Übertragung eines Signals von der ersten Regeleinrichtung über den Übertragungsweg zu der zweiten Regeleinrichtung, wobei das Signal durch die erste Regeleinrichtung bestimmt wird und einen zu regelnden Zustand darstellt;

dadurch gekennzeichnet, daß die erste Regeleinrichtung (56) eine Verarbeitung zur Berechnung eines ersten geregelten Parameters auf der Basis der gespeisten Daten ausführt und auf der Basis des so berechneten ersten geregelten Parameters entscheidet, ob die zweite Regeleinrichtung (63) zusammen mit der ersten Regeleinrichtung betrieben werden muß, und wobei die erste Regeleinrichtung bei einem erforderlichen gemeinsamen Betrieb ein Ausgangssignal erzeugt, welches einen Befehl umfaßt, der eine gemeinsame Anforderung an den Übertragungsweg anzeigt; und

wobei die zweite Regeleinrichtung (63) einen Verarbeitungsvorgang zur Berechnung des zweiten regelbaren Parameters ausführt, und zwar als Reaktion auf das Ausgangssignal, welches den Befehl der gemeinsamen Anforderung umfaßt, der von der ersten Regeleinrichtung (56) erzeugt worden ist; und wobei die ersten und zweiten Einstellungseinrichtungen (58, 53, 62(a), 62(b)) die ihnen zugeordneten ersten und zweiten regelbaren Parameter gleichzeitig und gemäß den Verarbeitungsergebnissen der entsprechenden ersten und zweiten Regeleinrichtungen regeln.

2. Vorrichtung nach Anspruch 1, wobei mehr als zwei Einstellungseinrichtungen (58, 53, 62(a), 62(b), 65(a), 65(b) vorgesehen sind, wobei jede zur Einstellung eines entsprechenden Parameters des Fahrzeugs dient, und wobei jede Einstellungseinrichtung so angeordnet ist, daß sie von einer entsprechenden Regeleinrichtung (53, 63, 64) geregelt wird, wobei alle Regeleinrichtungen durch den genannten Übertragungsweg (10) miteinander verbunden sind, wobei die Übertragungseinrichtungen so angeordnet sind, daß sie Daten in einem Zustand über den Übertragunsweg übertragen, der einen zu regelnden Zustand darstellt, der von einer der Regeleinrichtungen an eine ausgewählte andere Regeleinrichtung bestimmt worden ist, wobei die genannte eine Regeleinrichtung und alle ausgewählten anderen Regeleinrichtungen ihre entsprechenden Einstellungseinrichtungen übereinstimmend regeln.

3. Vorrichtung nach Anspruch 1 oder 2, wobei Einrichtungen zur Verleihung einer Priorität für über den Übertragungsweg übertragene Signale vorgesehen sind.

4. Vorrichtung nach einem der vorstehenden Ansprüche, wobei es sich bei dem Signalübertragungsweg um einen Datenschnellbus und bei den Regeleinrichtungen um Mikroprozessoren handelt.

5. Vorrichtung nach einem der vorstehenden Ansprüche, wobei die Einstellungseinrichtungen mindestens ein Drossel-Stellglied (58), eine Kraftstoffeinspritzfahrzeug-Aufhängungsdämpfereinrichtung oder eine Fahrzeug-Aufhängungshöheneinstellungseinrichtung umfassen.

6. Vorrichtung nach einem der Ansprüche 1 bis 4, wobei die Regeleinrichtungen einen Motorregler (50) zur Regelung der Motorparameter, einen Getrieberegler (63) zur Regelung eines Gangwechselvorgangs und einen Drosselregler (56) zur Regelung eines Drosselöffnungswinkels umfassen, wobei der Motorregler (50) dazu geeignet ist, Motordaten wie etwa die Luftmenge und die Motordrehzahl einzulesen, das Motordrehmoment zu berechnen und die Drehmomentberechnung über den Übertragungsweg an den Getrieberegler (63) zu übertragen, wobei der Getrieberegler (63) dazu geeignet ist, ein geeignetes Übersetzungsverhältnis zu berechnen und abhängig davon ein Gangwechsel-Stellglied anzutreiben, um einen Gangwechsel zu bewirken, und wenn der Getrieberegler (63) die Notwendigkeit eines Gangwechsels bestimmt, gibt der Getrieberegler (63) über den Übertragungsweg ein Signal an den Drosselregler (56) ab, wobei der Drosselregler (56) so angeordnet ist, daß er ein Drosselstellglied betätigt, so daß die Drosselklappe in einem erforderlichen Winkel geöffnet wird, so daß ein im wesentlichen ruckfreier Gangwechsel durchgeführt werden kann, wobei das Gangwechsel-Stellglied und das Drossel-Stellglied zueinander synchron wirken.

7. Vorrichtung nach einem der Ansprüche 1 bis 4, wobei die Regeleinrichtung einen Motorregler (50), einen Drosselregler (56) und einen Aufhängungsregler (64) umfaßt, wobei der Motorregler Signale von einem Gaspedalproportion-Winkelstellungssensor und einem Bremspedal-Winkelstellungssensor empfängt, wobei der Motorregler ein Signal, das den Gaspedalwinkel bzw. den Bremspedalwinkel anzeigt, über den Übertragungsweg (10) an den Drosselregler (50) und gleichzeitig an den Aufhängungsregler (64) abgeben kann, wobei der Drosselregler ein Drossel-Stellglied betätigt, und wobei der Aufhängungsregler (64) so angeordnet ist, daß er die Fahrzeug-Fahrhöhe und die Aufhängungsdämpfkraft regelt.

8. Vorrichtung nach Anspruch 7, wobei der Aufhängungsregler (64) so angeordnet ist, daß er die Fahrzeughöhen-Stellglieder (65(a)) und die Dämpfkraft-Stellglieder (65(b)) regelt, und bei einer Beschleunigung des Fahrzeugs bewirkt der Regler (64), daß die vorderen Fahrzeugdämpfer ihre Fahrhohe verringern, wobei die hinteren Fahrzeugdämpfer (65(a)) ihre Fahrhöhe erhöhen, und daß sich das Dämpfkraft-Stellglied (65(b)) versteift, und wenn der Aufhängungsregler einen Bremsvorgang feststellt, bewirkt er eine Erhöhung der Fahrhöhe der vorderen Fahrzeugdämpfer und eine Verringerung der Fahrhöhe der hinteren Fahrzeugdämpfer (65(a)) sowie eine Versteifung des Dämpfkraft-Stellglieds (65(b)).

9. Vorrichtung nach einem der Ansprüche 1 bis 4, wobei die Regeleinrichtung einen Motorregler (50), einen Drehmomenterfassungsregler (61) und einen Getrieberegler (63) umfaßt, wobei der Motorregler mit einer Einrichtung zur Bestimmung eines Zylinders, der einen Arbeitshub ausübt, verbunden ist, und wobei der Motorregler dazu geeignet ist, ein Signal an den Drehmomentregler (61) abzugeben, das den Zylinder anzeigt, der einen Arbeitshub bewirkt, wobei der Drehmomentregler mit den Motor-Kurbelwellendrehmomentsensoren (62-(a), 62(b)) verbunden und dazu geeignet ist, das Motordrehmoment zu berechnen und ein dieses Drehmoment darstellendes Signal über den Übertragungsweg (10) an den Getrieberegler (50) und den Motorregler zu übertragen, woraufhin der Motorregler (50) das berechnete Drehmomentsignal mit vorbestimmten Drehmomentwerten vergleichen kann, so daß dadurch das erforderliche Ausmaß der Drosselöffnung berechnet werden kann, wobei der Getrieberegler im wesentlichen synchron dazu ein geeignetes Übersetzungsverhältnis abhängig von dem berechneten Drebmomentsignal des Drehmomentreglers (61) bestimmt.

10. Vorrichtung nach Anspruch 1, wobei die Regeleinrichtungen einen Motorregler (50) und einen Klopferfassungsregler (59) umfassen, wobei der Motorregler mit einer Meßfühlereinrichtung verbunden ist, um einen Zylinder zu erfassen, der einen Arbeitshub bewirkt, und wobei der Motorregler ferner mit einer Stellgliedeinrichtung verbunden ist, um die Kraftstoffeinspritzbandbreite und die Zündeinstellung zu regeln, wobei der Klopferfassungsregler mit einem Klopfsensor (Figur 39, Figur 40, Figur 43) verbunden ist, wobei der Motorregler einen Zylinder bestimmen kann, der einen Arbeitshub bewirkt, und wobei der Motorregler ferner ein diesen Hub darstellendes Signal über den Übertragungsweg (10) an den Klopferfassungsregler (59) übertragen kann, wobei der Klopferfassungsregler (59) so angeordnet ist, daß er den Klopfpegel des Klopfsensors erfaßt und ein diesen Zustand darstellendes Signal in Kombination mit einem Zylinderidentifizierungssignal über den Übertragungsweg (10) an den Motorregler (10) überträgt, wobei der Motorregler die Kraftstoffeinspritzbandbreite und die Zündeinstellung für die Stellgliedeinrichtung berechnen kann.

11. Vorrichtung nach Anspruch 1, wobei die Regeleinrichtungen einen Diagnoseregler (67) umfassen, der mit einer Mehrzahl von Sensoren verbunden ist, die entsprechende Betriebszustände des Fahrzeugs anzeigen, wobei die Regeleinrichtungen ferner einen Speicherregler (68) zum Halten vorbestimmter Datenwerte und einen Anzeigeregler (69) zur Regelung einer Anzeige (66) umfassen, wobei die Regler über den Übertragungsweg (10) miteinander verbunden sind, wobei der Diagnoseregler Daten von den Sensoren über den Übertragungsweg (10) empfangen kann, um eine Abnormalität zu erkennen, wobei die Abnormalität folgend über den Übertragungsweg (10) an den Speicherregler übertragen wird, wobei der Speicherregler die empfangenen Daten statistisch auswertet und ein Signal über den Übertragungsweg (10) an den Anzeigeregler (69) überträgt, der die Anzeige antreibt, und wobei der Speicherregler (68) ein Pseudosignal erzeugen kann, um die ununterbrochene Funktionsweise des Fahrzeugs zu ermöglichen, wenn eine schwerwiegende Abnormalität erfaßt wird.

12. Vorrichtung nach Anspruch 11, wobei der Speicherregler so angeordnet ist, daß er ein Signal an den Anzeigeregler abgibt und ein Pseudosignal nur dann erzeugt, wenn abnorme Daten öfter empfangen worden sind, als dies vorbestimmt war.

13. Verfahren zur Steuerung eines Fahrzeugs, umfassend:

Einstellung erster und zweiter regelbarer Parameter eines Fahrzeuges mit entsprechenden ersten und zweiten Einstellungseinrichtungen;

Regelung der ersten und zweiten Einstellungseinrichtungen mit entsprechenden ersten und zweiten Regeleinrichtungen;

Bereitstellung eines Signalübertragungsweges, der die ersten und zweiten Regeleinrichtungen miteinander verbindet; und

Übertragung eines Signals von der ersten Regeleinrichtung über den Übertragungsweg zu der zweiten Regeleinrichtung, wobei das Signal durch die erste Regeleinrichtung bestimmt wird und einen zu regelnden Zustand darstellt;

gekennzeichnet durch die folgenden Schritte:

Ausführung einer Verarbeitung in der ersten Regeleinrichtung zur Berechnung eines ersten geregelten Parameters auf der Basis der gespeisten Daten und Entscheidung auf der Basis des so berechneten ersten geregelten Parameters, ob die zweite Regeleinrichtung zusammen mit der ersten Regeleinrichtung betrieben werden muß, und wobei die erste Regeleinrichtung bei einem erforderlichen gemeinsamen Betrieb ein Ausgangssignal erzeugt, welches einen Befehl umfaßt, der eine gemeinsame Anforderung an die zweite Regeleinrichtung über einen Übertragungsweg anzeigt;

Ausführung eines Verarbeitungsvorgangs zur Berechnung des zweiten regelbaren Parameters in der zweiten Regeleinrichtung, und zwar als Reaktion auf das Ausgangssignal, welches den Befehl der gemeinsamen Anforderung umfaßt, der von der ersten Regeleinrichtung erzeugt worden ist; und

Regelung der ersten und zweiten regelbaren Parameter durch die ersten und zweiten Einstellungseinrichtungen, und zwar gleichzeitig zu und gemäß den Verarbeitungsergebnissen der entsprechenden ersten und zweiten Regeleinrichtungen.

**Revendications**

1. Dispositif de commande de véhicule comprenant :

des premiers et deuxièmes moyens de réglage (58, 53, 62(a), 62(b)) pour régler des premiers et deuxièmes paramètres commandés d'un véhicule, respectivement ;

des premier et deuxième moyens de commande (56, 63), connectés auxdits premiers et deuxièmes moyens de réglage (58, 53, 62(a), 62(b)), pour commander lesdits premiers et deuxièmes moyens de réglage, respectivement ;

un trajet de communication de signal (10) interconnectant lesdits premier et deuxième moyens de commande ; et

des moyens de transmission (21, 24) pour transmettre un signal dudit premier moyen de commande audit deuxième moyen de commande par l'intermédiaire dudit trajet de communication, ledit signal étant déterminé par ledit premier moyen de commande et étant représentatif d'un état à commander ;

caractérisé en ce que ledit premier moyen de commande (56) exécute un traitement pour calculer le premier paramètre commandé sur la base de données fournies, estime, sur la base du premier paramètre commandé ainsi calculé, si oui ou non ledit deuxième moyen de commande (63) doit fonctionner en association avec ledit premier moyen de commande, et produit, si le fonctionnement en association est requis, un signal de sortie comprenant une instruction indiquant une requête d'association audit trajet de communication ; et

ledit deuxième moyen de commande (63) exécute une opération de traitement pour calculer le deuxième paramètre commandé en réponse au signal de sortie qui comprend l'instruction indiquant la requête d'association produite par ledit premier moyen de commande (56) ; et en ce que

lesdits premiers et deuxièmes moyens de réglage (58, 53, 62(a), 62(b)) commandent les premier et deuxième paramètres commandés qui leur sont associés simultanément et conformément aux résultats de traitement des premier et deuxième moyens de commande respectifs.

2. Dispositif selon la revendication 1, dans lequel il est prévu plus de deux moyens de réglage (58, 53, 62(a), 62(b), 65(a), 65(b)), chacun pour régler un paramètre respectif dudit véhicule et chaque moyen de réglage étant agencé pour être commandé par un moyen de commande respectif (56, 63, 64), l'ensemble desdits moyens de commande étant interconnectés les uns aux autres par ledit trajet de communication (10), lesdits moyens de transmission étant agencés pour transmettre des données par l'intermédiaire dudit trajet de communication d'un état représentatif d'un état à commander déterminé par l'un desdits moyens de commande pour sélectionner d'autres desdits moyens de commande, ledit un desdits moyens de commande et l'ensemble desdits autres moyens de commande sélectionnés commandant leurs moyens de réglage respectifs à l'unisson.

3. Dispositif selon la revendication 1 ou la revendication 2, dans lequel des moyens sont prévus pour attribuer une priorité aux signaux transmis sur ledit trajet de communication.

4. Dispositif selon l'une quelconque des revendications précédentes, dans lequel le trajet de communication de signal est un bus de données et lesdits moyens de commande sont des microprocesseurs.

5. Dispositif selon l'une quelconque des revendications précédentes, dans lequel lesdits moyens de réglage comprennent au moins un moyen parmi un actionneur de papillon des gaz (58), un moyen d'amortisseur de suspension de véhicule à injecteur de carburant, un moyen de réglage de hauteur de suspension de véhicule.

6. Dispositif selon l'une quelconque des revendications 1 à 4, dans lequel lesdits moyens de commande comprennent un dispositif de commande de moteur (50) pour commander des paramètres du moteur, un dispositif de commande de transmission (63) pour commander le fonctionnement du changement de vitesse et un dispositif de commande du papillon des gaz (56) pour commander l'angle d'ouverture du papillon des gaz, ledit dispositif de commande de moteur (50) étant conçu pour lire des données du moteur incluant la quantité d'air et la vitesse du moteur, calculer le couple du moteur et transmettre ledit calcul de couple sur ledit trajet de communication audit dispositif de commande de transmission (63), ledit dispositif de commande de transmission (63) étant conçu pour évaluer un rapport d'engrenage approprié et, en fonction de celui-ci, entraîner un actionneur de changement de vitesse pour effectuer un changement de vitesse, ledit dispositif de commande de transmission (63) étant conçu pour fournir en sortie un signal sur ledit trajet de communication audit dispositif de commande du papillon des gaz (56) si ledit dispositif de commande de transmission (63) détermine qu'un changement de vitesse est nécessaire, ledit dispositif de commande du papillon des gaz (56) étant conçu pour actionner un actionneur de papillon des gaz afin d'ouvrir le papillon des gaz selon un angle requis pour effectuer un changement de vitesse sensiblement sans à-coups, ledit actionneur de changement de vitesse et ledit actionneur de papillon des gaz agissant en synchronisme l'un avec l'autre.

7. Dispositif selon l'une quelconque des revendications 1 à 4, dans lequel les moyens de commande comprennent un dispositif de commande de moteur (50), un dispositif de commande de papillon des gaz (56) et un dispositif de commande de suspension (64), ledit dispositif de commande de moteur étant conçu pour recevoir des signaux provenant d'un détecteur d'angle de pédale d'accélérateur et d'un détecteur d'angle de pédale de freinage, ledit dispositif de commande de moteur étant conçu pour fournir un signal indiquant l'angle de la pédale d'accélérateur ou l'angle de la pédale de freinage sur le trajet de communication (10) au dispositif de commande de papillon des gaz (56) et en synchronisme au dispositif de commande de suspension (64), ledit dispositif de commande de papillon des gaz étant conçu pour commander un actionneur de papillon des gaz et ledit dispositif de commande de suspension (64) étant conçu pour commander la hauteur de course du véhicule et la force d'amortissement de suspension.

8. Dispositif selon la revendication 7, dans lequel le dispositif de commande de suspension (64) est conçu pour commander des dispositifs (65-(a)) de commande de hauteur du véhicule et des dispositifs (65(b)) de commande de force d'amortissement, moyennant quoi, lorsque le véhicule accélère, le dispositif de commande (64) est conçu pour amener les amortisseurs avant du véhicule à diminuer leur hauteur de course, les amortisseurs arrière (65(a)) du véhicule à augmenter leur hauteur de course et le dispositif (65(b)) de commande de force d'amortissement à se raidir, et quand un freinage est détecté par le dispositif de commande de suspension, ledit dispositif de commande de suspension est conçu pour amener les amortisseurs avant du véhicule à augmenter leur hauteur de course et les amortisseurs arrière (65(a)) du véhicule à diminuer leur hauteur de course, et le dispositif (65(b)) de commande de force d'amortissement à se raidir.

9. Dispositif selon l'une quelconque des revendications 1 à 4, dans lequel les moyens de commande comprennent un dispositif de commande de moteur (50), un dispositif de commande de détection de couple (61) et un dispositif de commande de transmission (63), ledit dispositif de commande de moteur est connecté à un moyen pour identifier un cylindre provoquant une course motrice et ledit dispositif de commande de moteur est conçu pour fournir en sortie un signal qui indique ledit cylindre provoquant une course motrice audit dispositif de commande de couple (61), ledit dispositif de commande de couple est connecté à des capteurs (62(a), 62(b)) de couple de vilebrequin du moteur et est conçu pour évaluer le couple du moteur, et pour transmettre un signal représentatif de celui-ci sur ledit trajet de communication (10) audit dispositif de commande de transmission (63) et audit dispositif de commande de moteur, sur quoi le dispositif de commande de moteur (50) est conçu pour comparer le signal de couple évalué avec des valeurs de couple prédéterminées pour ainsi calculer la quantité nécessaire d'ouverture du papillon des gaz et sensiblement en synchronisme avec cela, le dispositif de commande de transmission est conçu pour déterminer un rapport d'engrenage approprié en fonction du signal de couple évalué provenant du dispositif de commande de couple (61).

10. Dispositif selon la revendication 1, dans lequel les moyens de commande comprennent un dispositif de commande de moteur (50) et un dispositif de commande de détection de cognement (59), le dispositif de commande de moteur étant connecté à un moyen de détection pour détecter un cylindre provoquant une course motrice et à un moyen d'actionneur pour commander la largeur d'impulsion d'injection de carburant et le temps d'allumage, ledit dispositif de commande de détection de cognement étant connecté à un détecteur de cognement (figure 39, figure 40, figure 42), ledit dispositif de commande de moteur étant conçu pour identifier un cylindre provoquant une course motrice et pour transmettre un signal l'indiquant sur ledit trajet de communication (10) au dispositif de commande de détection de cognement (59), ledit dispositif de commande de détection de cognement (59) étant conçu pour détecter le niveau de cognement provenant du détecteur de cognement et pour transmettre un signal représentatif de celui-ci en combinaison avec un signal d'identification de cylindre sur ledit trajet de communication (10) au dispositif de commande de moteur, ledit dispositif de commande de moteur étant conçu pour calculer la largeur d'impulsion d'injection de carburant et le temps d'allumage pour ledit moyen d'actionneur.

11. Dispositif selon la revendication 1, dans lequel les moyens de commande comprennent un dispositif de commande de diagnostic (67) connecté à plusieurs capteurs indiquant des états de fonctionnement respectifs dudit véhicule, un dispositif de commande de mémoire (68) pour conserver des valeurs de données prédéterminées, et un dispositif de commande d'affichage (69) pour commander un affichage (66), les dispositifs de commande étant interconnectés par l'intermédiaire dudit trajet de communication (10), moyennant quoi ledit dispositif de commande de diagnostic est conçu pour recevoir des données par l'intermédiaire dudit trajet de communication (10) provenant desdits capteurs pour détecter une anomalie, ladite anomalie étant ensuite transmise par l'intermédiaire dudit trajet de communication (10) audit dispositif de commande de mémoire, ledit dispositif de commande de mémoire étant conçu pour évaluer statistiquement des données reçues et pour transmettre un signal sur ledit trajet de communication (10) au dispositif de commande d'affichage (69) qui est conçu pour piloter ledit affichage, et ledit dispositif de commande de mémoire (68) est conçu pour produire un pseudo-signal afin de faciliter le fonctionnement ininterrompu du véhicule au cas où une anomalie sérieuse est détectée.

12. Dispositif selon la revendication 11, dans lequel ledit dispositif de commande de mémoire est conçu pour fournir en sortie un signal au dispositif de commande d'affichage et produire le pseudo-signal seulement quand des données anormales ont été reçues plus d'un nombre prédéterminé de fois.

13. Procédé de commande d'un véhicule comprenant les étapes consistant à :
régler des premier et deuxième paramètres commandés d'un véhicule à l'aide de premiers et deuxièmes moyens de réglage, respectivement ;
commander lesdits premiers et deuxièmes moyens de réglage à l'aide de premier et deuxième moyens de commande, respectivement ;

fournir un trajet de communication de signal interconnectant lesdits premier et deuxième moyens de commande ; et

transmettre un signal dudit premier moyen de commande audit deuxième moyen de commande sur ledit trajet de communication, ledit signal étant déterminé par ledit premier moyen de commande et étant représentatif d'un état à commander ;

caractérisé par les étapes supplémentaires consistant à

exécuter un traitement dans lesdits moyens de commande pour calculer le premier paramètre commandé sur la base de données fournies et estimer sur la base du premier paramètre commandé ainsi calculé si oui ou non ledit deuxième moyen de commande doit fonctionner en association avec le premier moyen de commande, ledit premier moyen de commande produisant, si le fonctionnement en association est requis, un signal de sortie comprenant une instruction indiquant une requête d'association audit deuxième moyen de commande sur un trajet de communication ;

exécuter une opération de traitement dans ledit deuxième moyen de commande pour calculer le deuxième paramètre commandé en réponse au signal de sortie comprenant l'instruction indiquant la requête d'association produite par ledit moyen de commande ; et

commander les premier et deuxième paramètres commandés par lesdits premiers et deuxièmes moyens de réglage simultanément et conformément aux résultats de traitement des premier et deuxième moyens de commande respectifs.

Fig. 1

Fig. 2

Fig. 3

Fig. 4

ENGINE
(CPU 1)

| CPU |
| RAM |
| INT |

THROTTLE
(CPU 2)

| CPU |
| RAM |
| INT |

GEAR
(CPU 3)

| CPU |
| RAM |
| INT |

DATA

DATA

10

# Fig. 5

(CPU 1)
TIMER 1

| READ DATA | —600 |
| DECIDE ORDER OF PRIORITY | —610 |
| REQUEST TRANSMISSION TO COMMUNICATION DEVICE 21 | —620 |

# Fig. 6

(CPU 2)
TIMER 1

| 700— | REQUEST DATA |
| 710— | RECEIVE DATA | NO |
| 720— | START CALCULATION PROGRAM |

# Fig. 7

**(CPU 2)**
**CALCULATION PROGRAM**

- READ DATA — 800
- EXECUTE CALCULATION (CAL 1) — 810
- COOPERATION WITH CPU 1 NECESSARY ? — 820
  - NO
  - YES
- DETERMINE THE ORDER OF PRIORITY OF CAL 1 — 830
- REQUEST TRANSMISSION TO COMMUNICATION DEVICE 21 — 840

**Fig.8**

**(CPU 1)**
**TIMER 2**

- 900 — REQUEST DATA CAL 1
- 910 — RECEIVE CAL 1
  - NO
  - YES
- 920 — READ CAL 1
- 930 — CALCULATION (CAL 2)
- 940 — OUTPUT CAL 2
- 950 — TRQ.FLAG "1"
- 960 — TRANSMIT IRQ.FLAG
- 970 — IRQ.FLAG "0" START PROGRAM

**Fig.9**

EP 0 388 107 B1

Fig. 10

Fig. 11

Fig. 12

**Fig. 13**

**Fig. 14**

ENGINE CONTROL

START

1500 — DETECT n

**Fig. 15**

1510 — $Qa/n = f(n)$
(CALCULATE $Qa/n$)

1520 — TRANSMIT n
and $Qa/n$

RETURN

TRANSMISSION CONTROL

START

READ
n, $Qa/n$ — 1600

COMPARE LOAD
$Qa/n > (Qa/n)_0$

1610

NO

1620

YES

NO

COMPARE
NUMBER OF
HIGH-SPEED
REVOLUTIONS

$n > n_0$

$n > n_0'$

NO

COMPARE NUMBER
OF LOW-SPEED
REVOLUTIONS

1640

YES

YES

TRANSMIT
HIGHER-SPEED
ROTATION SHIFT
SIGNAL S

TRANSMIT LOWER
SPEED ROTATION
SHIFT SIGNAL S'

1650

1630

RECEIVE SHIFT
OK SIGNAL C

1660

**Fig. 16**

SHIFT AFTER
x msec

1670

RETURN

THROTTLE VALVE CONTROL

1700 — RECEIVE SHIFT

1710 — S ?
HIGHER-SPEED
ROTATION
SHIFT

NO → S'

YES

1760 — READ P

1720 — READ P

1770 — $\theta = h\ (P.S')$
CALCULATE
THROTTLE
OPENING ANGLE

1730 — $\theta = g\ (P.S\ )$
CALCULATE
THROTTLE
OPENING ANGLE

1740 — TRANSMIT SHIFT
OK SIGNAL C

1750 — DRIVE THROTTLE
VALVE AFTER
y msec

Fig. 17

Fig. 18(a)

Fig. 18(b)

Fig. 19(a)

Fig. 19(b)

Fig. 19(c)

Fig. 19(d)

Fig.20

EP 0 388 107 B1

Fig. 21

Fig. 22

Fig. 23

Fig. 24

ACCELERATOR
OPENING ANGLE

$(\theta_{ac})$

$\Delta\theta_{ac}$

(a)

THROTTLE
OPENING ANGLE

x

y

(b)

VEHICLE HEIGHT
OF FRONT WHEELS

HIGH

LOW

(c)

VEHICLE HEIGHT
OF REAR WHEELS

HIGH

LOW

(d)

DAMPING FORCE

LARGE

SMALL

(e)

VIBRATION OF
VEHICLE BODY

(f)

TIME (m sec)

Fig. 25

ACCELERATOR
OPENING ANGLE
$(\theta_{ac})$

**(a)**

BRAKE PEDAL
ANGLE $(\theta_{Br})$

$\Delta\theta_{Br}$

**(b)**

VEHICLE HEIGHT
OF FRONT WHEELS

HIGH

LOW

**(c)**

VEHICLE HEIGHT
OF REAR WHEELS

HIGH

LOW

**(d)**

DAMPING FORCE

LARGE

SMALL

**(e)**

VIBRATION OF
VEHICLE BODY

**(f)**

TIME (m sec )

# Fig. 26

ENGINE CONTROLLER

2700 — DETECT $\theta_{ac}$

2710 — DETERMINE $\Delta\theta_{ac}$

2720 — $\Delta\theta_{ac} \geqq A$ — NO

YES

2730 — TRANSMIT RAPID ACCELERATION INTERRUPTION SIGNAL $I_{ac}$

2740 — TRANSMIT $\Delta\theta_{ac}$

**Fig. 27**

ENGINE CONTROLLER

2800 — DETECT $\theta_{Br}$

2810 — $\Delta\theta_{Br}$

2820 — $\Delta\theta_{Br} \geqq B$ — NO

YES

2830 — TRANSMIT INTERRUPTION SIGNAL $I_{Br}$

2840 — TRANSMIT $\Delta_{Br}$

**Fig. 28**

EP 0 388 107 B1

**Fig.29**

THROTTLE
CONTROLLER

RECEIVE
INTERRUPTION
SIGNAL $I_{ac}$ —— 2900

RAPID
ACCELERATION
SIGNAL? —— 2910

NO

YES

RECEIVE $\Delta\theta_{ac}$ —— 2920

START
THROTTLE
CONTROL
PROGRAM —— 2930

**Fig.30**

THROTTLE
CONTROL
PROGRAM

3000 —— READ $\Delta\theta_{ac}$

3010 —— x

3020 —— y

3030 —— OUTPUT x,y

**Fig.31**

$\Delta\theta_{ac}$

SUSPENSION CONTROLLER

**Fig. 32**

3200 — RECEIVE INTERRUPTION SIGNAL

3210 — RAPID ACCELERATION SIGNAL ? → NO

YES

3220 — RECEIVE $\Delta\theta_{ac}$

3230 — START RAPID ACCELERATION PROGRAM

3240 — SUDDEN STOP SIGNAL ? → NO

YES

3250 — RECEIVE $\Delta\theta_{Br}$

3260 — START SUDDEN DECELERATION CONTROL PROGRAM

Fig.33

EP 0 388 107 B1

ENGINE

TRANSMISSION

62(a)

62(b)

**Fig.34**

10

50

63

70

ENGINE CONTROLLER

TRANSMISSION CONTROLLER

TORQUE DETECTING CONTROLLER

61

TORQUE SENSOR

TORQUE SENSOR

62(a)

62(b)

**Fig.36**

START

IDENTIFY
CYLINDER
NUMBER
Z —————— 3500

MEASURE
PERIOD OF
ANGLE PULSE —————— 3510

CALCULATE
ROTATIONAL
SPEED $\omega$ —————— 3520

CALCULATE $(\theta_1 - \theta_2)$ ———— 3530

CALCULATE $T_E$ ———— 3540

INTERGRATE $T_E$
TO OBTAIN
AVERAGE TORQUE
FOR EACH CYLINDER —————— 3550

Fig. 35

Fig.37

EP 0 388 107 B1

IGNITION COIL — 74

IGNITER — 73

ENGINE CONTROLLER — 50

A/D | KNOCKING DETECTING CONTROLLER

FILTER

54

60

71

72

59

## Fig.38

81

76

77

78

80

75

79

## Fig.39

Fig.40

Fig.41

Fig.42

Fig.43

Fig.44

Fig.45

Fig.46

Fig.47

Fig.48

Fig.49

EP 0 388 107 B1

**97** **96** **95**

| I/O SUBDEVICE | SIGNAL PROCESSING SUBDEVICE | COMMUNICATION DEVICE |

DATA ADDRESS BUS LINE

**67** **10**

DATA BUS

## Fig.50

**67** **69**

| DIAGNOSTIC CONTROLLER | DISPLAY CONTROLLER |

**10**

| MEMORY CONTROLLER |

## Fig.51

**68**

**67**

| | |
|---|---|
| CPU | ABNORMALITY IN $Q_a$ |
| DPRAM | IDENTIFICATION CODE AND ABNORMALITY CODE IN $Q_a$ |
| BUS INTERFACE | TRANSMISSION |

**66**

| |
|---|
| DISPLAY eg. "TO REPAIR SHOP" |
| |
| RECEIVE DATA |

$n, T_p, Q_a$

**10**

| |
|---|
| RECEIVE $Q_a$ DATA |
| |
| STORE DATA IN MEMORY |

**68**

# Fig.52

MEMORY

| |
|---|
| IDENTIFICATION CODE |
| NUMBER OF TIMES ABNORMAL DATA RECEIVED |
| IDENTIFICATION CODE |
| NUMBER OF TIMES ABNORMAL DATA RECEIVED |
| |

# Fig.53

Fig.54

5400 — READ DATA AND IDENTIFICATION CODE

5410 — $Q_a \leq 0v$

5420 — $Q_a \geq 5v$

5430 — ADD ABNORMAL CODE TO DATA $Q_a$

5440 — TRANSMIT TO COMMUNICATION BUS

Fig.57

5700 — READ DATA IN MEMORY

5710 — TRANSMIT DATA

Fig.56

PSEUDO SIGNAL GENERATION PROGRAM

5600 — STOP SIGNAL AT POSITION SERIOUS ERROR HAS CAUSED

5610 — READ TASK STARTING SIGNAL AT POSITION SERIOUS ERROR HAS OCCURED

56

```
                          ▽

5500 ──┐      ┌─────────────────────┐
       │      │    READ DATA AND     │◄──────┐
       └──────│  IDENTIFICATION CODE │       │
              └─────────────────────┘       │
                        │                    │
                        ▼                    │
                     ◇◇◇◇◇◇◇                 │
5510 ──────────◇           ◇                 │
               ◇ ABNORMAL DATA? ◇            │
                ◇           ◇                 │
                   ◇◇◇◇◇◇◇                    │
                        │ YES                 │
                        ▼                     │
              ┌─────────────────────┐        │
              │  ADD IDENTIFICATION │        │
5520 ─────────│  CODE AND NUMBER OF │        │
              │    TIMES TO MEMORY  │        │
              └─────────────────────┘        │
                        │                     │
                        ▼                     │
                    ◇◇◇◇◇◇◇◇                  │
                  ◇   EXCEED   ◇              │
                 ◇  THE NUMBER  ◇             │
5530 ──────────◇ OF TIMES OF ABNORMAL ◇  NO  │
                ◇ DATA RECEPTION SET ◇ ──────┘
                 ◇  IN ADVANCE ?  ◇
                    ◇◇◇◇◇◇◇◇
                        │ YES
                        ▼
              ┌─────────────────────┐
              │   TRANSMIT THE DATA │
              │  WITH DISPLAY CODE  │
5540 ─────────│   TO COMMUNICATION  │
              │       BUS 10        │
              └─────────────────────┘
                        │
                        ▼
              ┌─────────────────────┐
              │   START PSEUDO      │
5550 ─────────│  SIGNAL GENERATING  │
              │ PROGRAM(FIG 56)     │
              └─────────────────────┘
                        │
                        ▼
                        △
```

Fig.55

| |
|---|
| TASK STARTING SIGNAL 1 |
| PSEUDO DATA 1 |
| TASK STARTING SIGNAL 2 |
| PSEUDO DATA 2 |
| ⋮ |

**Fig.58**

5900 — READ DATA AND IDENTIFICATION CODE

5910 — IS THERE A DISPLAY CODE ?     NO

YES

5920 — DISPLAY IN ACCORDANCE WITH DISPLAY CODE SET IN ADVANCE eg. "$Q_a$ SIGNAL IS ABNORMAL"

**Fig.59**

DIAGNOSTIC
CONTROLLER

MEMORY
CONTROLLER

DISPLAY
CONTROLLER

Fig.60

RECEIVE
DATA

(1)

DETECT
ABNORMALITY

TRANSMIT
ABNORMAL
DATA

RECEIVE
ABNORMAL
DATA

(2)

(3)

(4)

STATISTIC
PROCESSING

GENERATE
PSEUDO
SIGNAL

(5)

(6)

(7)

DISPLAY

(9)

TRANSMIT
SERIOUSLY
ABNORMAL
DATA

RECEIVE
SERIOUSLY
ABNORMAL
DATA

(8)

67

10

68

10

69

EP 0 388 107 B1